# EUROPEAN PATENT APPLICATION

(11) **EP 1 450 297 A1**
(43) Date of publication of application: **25.08.2004**
(21) Application number: 03799174.2
(22) Date of filing: 30.09.2003
(51) Int. Cl.: G06K 17/00, G06K 19/00, G06F 15/00, G06F 12/00, G06F 17/60

(54) **DATA MANAGEMENT SYSTEM, DATA MANAGEMENT METHOD, VIRTUAL MEMORY DEVICE, VIRTUAL MEMORY CONTROL METHOD, READER/WRITER DEVICE, IC MODULE ACCESS DEVICE, AND IC MODULE ACCESS CONTROL METHOD**

(30) Priority: 04.10.2002 JP 2002291956; 04.10.2002 JP 2002291957; 04.10.2002 JP 2002291958
(71) Applicant: Sony Corporation, Tokyo 141-0001 (JP)
(72) Inventor: MATSUO, Takashi, SHINAGAWA-KU, Tokyo 141-0001 (JP); OCHI, Ryo, SHINAGAWA-KU, Tokyo 141-0001 (JP)
(74) Representative: Smith, Samuel Leonard
(86) International application number: PCT/JP2003/012473
(87) International publication number: WO 2004/032039

(57) **Abstract**

An ID is stored on an IC module, and a link to data in a virtual memory module is formed, whereby a memory of the IC module is virtually expanded. A file structure in a data storage unit of the IC module has an upper limit value, and the upper limit value is linked to a file structure in the virtual memory module. The virtual memory module is connected to the IC module via a network. When the IC module communicates with a reader/writer, if data that is supposed to be stored on the IC module is not present in the IC module, a data storage unit in the virtual memory module is accessed.

## Description

### Technical Field

The present invention relates to IC modules having a memory function for holding data and to data management systems for accessing the IC modules. Particularly, the present invention relates to a data management system for expanding a memory area associated with an IC module.

### Background Art

Various apparatuses that use identification numbers or passwords for personal identification or authentication have been developed and are being used in practice. For example, when using cash cards or credit cards at banks or other financial agencies, a user is prompted to enter an identification number or a password for personal identification on a cash dispenser or other financial terminals, and operation for transferring money is executed after confirming that a correct identification number or password has been entered by the user.

In a storage medium included in a cash card, such as a magnetic stripe, only a storage area that can be used at the specific bank is provided. Thus, the input of an identification number or password described above is only an access to the single storage area, so that protection against forgery or stealing is far from sufficient.

In order to serve purposes of preventing forgery or the like, modules having an IC function in a cash card or a credit card, such as a contact IC card having an electrical contact or a contactless IC card for reading or writing data in a contactless manner by way of wireless data (hereinafter also referred to as "IC modules") are being more commonly used. For example, an IC card reader/writer disposed at a cash dispenser, an entrance/exit of a concert hall, or a ticket gate of a station is capable of accessing in IC card placed thereover by a user.

The user enters an identification number to the IC card reader, and the identification number entered is compared against an identification number stored on the IC card, thereby executing personal identification or authentication between the IC card and the IC card reader/writer. When the personal identification or authentication has succeeded, for example, use of an application stored in the IC card is allowed. An example of the application held in the IC card is value information such as electronic money or electronic ticket. (An identification number that is used to access an IC card is particularly referred to as a personal identification number (PIN)).

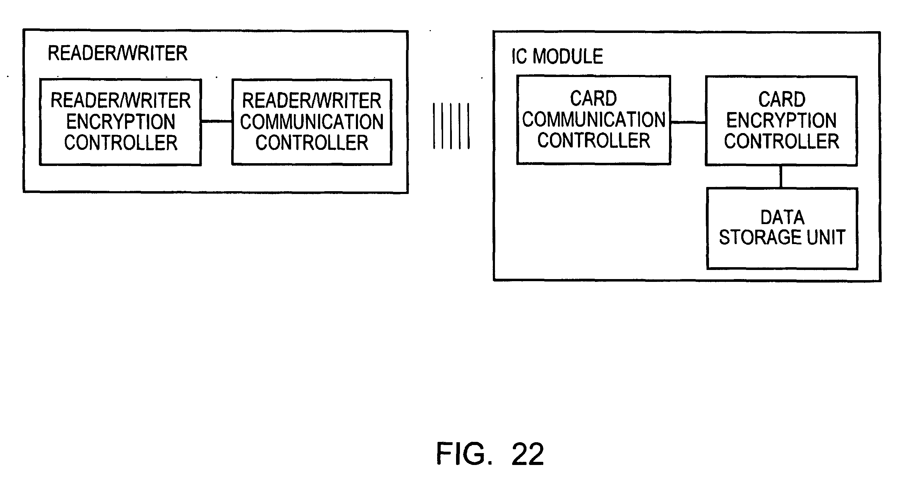

Fig. 22 schematically shows an example configuration of a system using an IC module (related art). As shown in the figure, the system includes an IC module that is carried by a user and that securely holds particular data, and a reader/writer for accessing a memory space of the IC module to read or write data.

The IC module is packaged, for example, in the form of a card, and it includes a data storage unit, a card communication controller for communicating with the reader/writer, and a card encryption controller for controlling encryption of data exchanged with the reader/writer.

The reader/writer includes a reader/writer communication controller for communicating with the IC module, and a reader/writer encryption controller for controlling encryption of data exchanged with the IC module.

The respective communication controllers of the IC module and the reader writer connect to each other, for example, in a contactless manner based on the principles of electromagnetic induction.

The reader/writer communication controller issues a command, and the TC module receives the command by the card communication controller and executes processing such as decryption in the card encryption processor, accessing data stored in the data storage unit. Furthermore, the IC module generates a response in the card encryption processor, and returns the response to the reader/writer. Transactions are completed by repeatedly executing the sequence.

Recently, with the improvement in miniaturization technologies, IC modules including data storage units having relatively large capacities have been developed and are coming to be used more commonly. A conventional cash card or the like has only a single storage area, that is, a single application. Thus, a plurality of IC cards for respective applications or purposes must be carried. In contrast, an IC module including a memory having a large capacity allows storing a plurality of applications simultaneously. Thus, a single IC card can be used for a plurality of applications. For example, two or more applications can be stored on a single IC card, such as electronic money for electronic settlement and electronic ticket for transportation or entering a specific concert hall, so that the single IC card can be used for various applications.

However, IC modules have been developed for the purpose of securely carrying data, so that an IC module is usually implemented in the form of a card, or is implemented in the form of a chip and is included in a small device such as a cellular phone or a PDA. That is, an IC module often has hardware restrictions, so that the memory size of a data storage unit has an upper limit despite of the increase in capacity.

For example, the inventors have developed a method of providing a virtual memory module externally to an IC module (e.g., on a network) in order to virtually expand a memory area of a data storage unit in the IC module, which is limited in terms of hardware.

The virtual memory module itself is not carried for use by a user, so that it does not have hardware restrictions such as a card shape. Thus, the data storage unit of the virtual memory module is implemented using a large-capacity storage device such as a hard disk, and it operates as a virtual memory space of the data storage unit of the IC module. The virtual memory module is implemented, for example, by a server machine provided on a broadband network.

In this case, by executing virtual transactions with the virtual memory module, the memory area in the IC module, which is limited in terms of hardware, is virtually expanded. Thus, the maximum memory capacity of the IC module becomes essentially unlimited.

However, if data is stored in the virtual memory module that is connected via the network, a response time could be considerably long depending on the bandwidth of the network. For example, in an application for using electronic ticket for transportation, an immediate response is expected. Thus, it is difficult to simply use the virtual memory module.

Furthermore, by implementing functions of IC module and reader/writer simultaneously on a single terminal, the terminal is allowed to both send and receive data. In that case, in order to securely exchange data between two terminals or with terminals of other types, the terminals must each include a secure data storage unit having a large capacity and exchange data between the terminals. This incurs the following problems.
(1) In order to connect by wireless communication, the connection must be maintained for a long time if the volume of data is large relative to the rate of wireless communication.
(2) The terminals must include secure memory having large capacities, so that cost is high.

### Disclosure of Invention

It is an object of the present invention to provide a favorable data management system that allows expanding a memory area associated with an IC module.

It is another object of the present invention to provide a favorable data management system that allows suitably changing the version of a program for executing a transaction between an IC module and a reader/writer.

It is another object of the present invention to provide a favorable data management system, reader/writer apparatus, and virtual memory device that allow expanding a memory area associated with an IC module by using a virtual memory module connected via a network or the like.

It is another object of the present invention to provide a favorable data management system, reader/writer apparatus, and virtual memory device with which an enhanced speed of data access is achieved when a memory area associated with an IC module is expanded using a virtual memory module connected via a network or the like.

It is an object of the present invention to provide a favorable data management method that allows value information stored on a server to be exchanged securely between two terminals.

It is another object of the present invention to provide a favorable data management method that allows a large volume of data to be exchanged securely in a short time between two terminals.

It is another object of the present invention to provide a favorable data management method that allows secure exchange between two terminals without holding a secure memory having a large capacity.

The present invention has been made in view of the objects described above, and a first aspect thereof is a data management system for expanding a memory area associated with an IC module, the data management system comprising:
a virtual memory module comprising a data storage unit for storing data that is used on the IC module and a card encryption function'controller for controlling encryption of communication data;
a reader/writer communication controller for accessing the memory area of the IC module;
a reader/writer encryption function controller for controlling encryption of communication data exchanged with the IC module; and
a reader/writer comprising a network communication controller for connecting to the virtual memory module via a network;
wherein the reader/writer accesses the virtual memory module to obtain data that is to be used on the IC module when the data is not present on the IC module.

A "system" herein refers to a logical combination of a plurality of apparatuses (or functional modules for achieving specific functions), without regard to whether the apparatuses or functional modules reside within a single case. (The same applies hereinafter.)

The virtual memory module is used to virtually expand the memory area of the data storage unit in the IC module, which is limited in terms of hardware. The virtual memory module itself is not carried for use by a user, so that it does not have hardware restrictions such as a card shape. Thus, the data storage unit of the virtual memory module is implemented using a large-capacity storage device such as a hard disk, and it operates as a virtual memory space of the data storage unit of the IC module. Thus, the maximum memory capacity of the IC module becomes essentially unlimited. The virtual memory module is implemented, for example, by a server machine provided on a broadband network. However, the virtual memory module may be implemented by an external storage device such as a hard disk, a memory module, or the like, provided for a PC on the user side, and the capability of network communication is not necessarily required.

When an ID or the like is transmitted in communications between the IC module and the reader/writer, encrypted communications based on an existing sequence of IC module communications are carried out. Furthermore, the reader/writer accesses the virtual memory module on behalf of the IC module, accessing relevant data. The virtual memory module is accessed by encrypted communication based on an existing sequence of network communications, such as TCP/IP protocols. In order to allow communications between a card including the IC module and the virtual memory module, the virtual memory module and the IC module must communicate with each other under the same protocols. This is achieved, for example, transmitting command packets between the card and the reader/writer over TCP/IP.

After an ID has been exchanged with the IC module, the reader/writer accesses an actual data entity in the virtual memory module by communications between high-end servers connected to each other via a broadband network. Thus, transactions end in a very short time.

The data storage unit of the IC module stores an ID for identifying a data space of the module, and a link to data in the data storage unit of the IC module is formed based on the ID. Furthermore, in the data storage unit, a specific file structure is formed, and an upper limit value thereof is set. The upper limit value is linked to a file structure in the data storage unit of the virtual memory module. When communicating with the IC module, if an entity of data stored in the data storage unit of the IC module is not present in the IC module, the reader/writer accesses the virtual memory module via the network to obtain desired data.

Furthermore, a server-side reader/writer module that is connected via the network, including a reader/writer encryption processor for controlling encryption of communication data exchanged with the IC module, may be provided.

In that case, the reader/writer receives a response received from the IC module, and transfers encrypted response data as it is to the server-side reader/writer module via the network, and the response data is processed in the server-side reader/writer module.

The server-side reader/writer module is implemented, for example, by a server machine that is provided on a broadband network and that is capable of accessing the virtual memory module. When obtaining data held in the IC module, if an entity of data stored in the data storage unit of the IC module is present in the IC module, the server-side reader/writer module accesses the IC module via the reader/writer to obtain the entity of data from the data storage unit of the IC module. On the other hand, if an entity of data stored in the data storage unit of the IC module is not present in the IC module, the server-side reader/writer module accesses the virtual memory module via the network to obtain the entity of data from the data storage unit of the'virtual memory module. After an ID has been exchanged with the IC module, an actual data entity in the virtual memory module is accessed by communications between high-end servers connected to each other via a broadband network. Thus, transactions end in a very short time.

Furthermore, a version management module may be provided on the network, the version management module preparing an upgrading program or upgrading programs for the reader/writer encryption processor of the reader/writer and/or the card encryption processor of the virtual memory module and transferring the upgrading program or upgrading programs to the reader/writer and/or the virtual memory module.

Virtual transactions with the virtual memory module are executed by cooperative operations of the reader/writer encryption function controller in the reader/writer (or the reader/writer encryption function controller in the server-side reader/writer module) and the card encryption controller in the virtual memory module. The cooperative operations for executing virtual transactions are usually implemented in the form of transaction executing programs executed by the respective modules.

The IC module and the reader/writer communicate with each other by a sequence using existing programs (corresponding to a handshake for communication). In subsequent communications between the reader/writer and the virtual memory module, transactions are executed based on an extended sequence using upgraded programs.

That is, by upgrading the transaction executing programs by the version management module, a fixed program of the IC module can be virtually extended.

Furthermore, processing with a large load that cannot be handled by the performance of the IC module can be executed by a server.

Furthermore, when a service entity wishes to extend a function of the IC module only for the sake of its own service, a unique service can be implemented at a low cost by using the existing IC module as it is and upgrading the version of a program of the virtual memory module.

A second aspect of the present invention is a virtual memory for expanding a memory area associated with an IC module, or a method of controlling the virtual memory, comprising:
a data storage unit for or a data storing step of storing data that is used on the IC module; and
a card encryption function controller for or a card encryption function controlling step of controlling encryption of communication data.

The virtual memory module itself is not carried for use by a user, so that it does not have hardware restrictions such as a card shape. Thus, the data storage unit of the virtual memory module is implemented using a large-capacity storage device such as a hard disk, and it operates as a virtual memory space of the data storage unit of the IC module. Thus, the maximum memory capacity of the IC module becomes essentially unlimited. The virtual memory module is implemented, for example, by a server machine provided on a broadband network.

After an ID has been exchanged with the IC module, the reader/writer accesses an actual data entity in the virtual memory module by communications between high-end servers connected to each other via a broadband network. Thus, transactions end in a very short time.

The data storage unit of the IC module stores an ID for identifying a data space of the module, and a link to data in the data storage unit of the IC module is formed based on the ID. Furthermore, in the data storage unit, a specific file structure is formed, and an upper limit value thereof is set. The upper limit value is linked to a file structure in the data storage unit of the virtual memory module. When communicating with the IC module, if an entity of data stored in the data storage unit of the IC module is not present in the IC module, the reader/writer accesses the virtual memory module via the network to obtain desired data.

A third aspect of the present invention is an IC module accessing device for accessing an IC module having a memory area expanded by a virtual memory module on a network, or a method of controlling access to the IC module, comprising:
a reader/writer communication controller for or a reader/writer communication controlling step of accessing the memory area of the IC module;
a reader/writer encryption function controller for or a reader/writer encryption function controlling step of controlling encryption of communication data exchanged with the IC module; and
a network communication controller for or a network communication controlling step of connecting to the virtual memory module via the network;
wherein the virtual memory module is accessed to obtain data that is to be used on the IC module when the data is not present on the IC module.

The virtual memory module itself is not carried for use by a user, so that it does not have hardware restrictions such as a card shape. Thus, the data storage unit of the virtual memory module is implemented using a large-capacity storage device such as a hard disk, and it operates as a virtual memory space of the data storage unit of the IC module. Thus, the maximum memory capacity of the IC module becomes essentially unlimited. The virtual memory module is implemented, for example, by a server machine provided on a broadband network.

After an ID has been exchanged with the IC module, the reader/writer accesses an actual data entity in the virtual memory module by communications between high-end servers connected to each other via a broadband network. Thus, transactions end in a very short time.

The data storage unit of the IC module stores an ID for identifying a data space of the module, and a link to data in the data storage unit of the IC module is formed based on the ID. Furthermore, in the data storage unit, a specific file structure is formed, and an upper limit value thereof is set. The upper limit value is linked to a file structure in the data storage unit of the virtual memory module. When communicating with the IC module, if an entity of data stored in the data storage unit of the IC module is not present in the IC module, the reader/writer accesses the virtual memory module via the network to obtain desired data.

A fourth aspect of the present invention is a data management system for expanding a memory area associated with an IC module, the data management system comprising:
a virtual memory module comprising a data storage unit for storing data that is used by a user of the IC module and a card encryption controller for controlling encryption of communication data;
a reader/writer communication controller for accessing the memory area of the IC module;
a reader/writer encryption controller for controlling encryption of communication data exchanged with the IC module;
a network communication controller for connecting to the virtual memory module via a network; and
a reader/writer comprising a cache writer for writing data that is used on the IC module more frequently than a predetermined frequency to the IC module.

The virtual memory module is used to virtually expand the memory area of the data storage unit in the IC module, which is limited in terms of hardware. The virtual memory module itself is not carried for use by a user, so that it does not have hardware restrictions such as a card shape. Thus, the data storage unit of the virtual memory module is implemented using a large-capacity storage device such as a hard disk, and it operates as a virtual memory space of the data storage unit of the IC module. Thus, the maximum memory capacity of the IC module becomes essentially unlimited. The virtual memory module is implemented, for example, by a server machine provided on a broadband network.

When an ID or the like is transmitted in communications between the IC module and the reader/writer, encrypted communications based on an existing sequence of IC module communications are carried out. Furthermore, the reader/writer accesses the virtual memory module on behalf of the IC module, accessing relevant data. The virtual memory module is accessed by encrypted communication based on an existing sequence of network communications, such as TCP/IP protocols.

Furthermore, in the data management system according to the present invention, when a virtual memory module that operates as a server is used, a cache of accesses is stored in an existing IC module. Thus, the speed of access to desired data that has been cached is improved.

The reader/writer may request the virtual memory module to reflect cache in response to rewriting of data cached on the IC module. Furthermore, the virtual memory module may further comprise a cache reflector for rewriting corresponding data in the data storage unit in response to the request for reflecting cache.

In that case, upon confirming that data in the IC module has been updated, the reader/writer starts accessing the virtual memory module, and reflects an updated state in the IC module to corresponding data in the virtual memory module, thereby maintaining consistency of cache data.

Furthermore, at least one of the reader/writer, the virtual memory module, and the IC module may comprise a cache selecting user interface for allowing a user to specify data to be cached. In that case, the cache writer writes the data selected via the cache selecting user interface from the virtual memory module to the IC module.

The user of the IC module is allowed to select specific value information that is frequently used, such as electronic money or electronic ticket, and to hold the value information on the IC module. By the user-driven caching of frequently used data, desired data can be used without connecting to the virtual memory module, so that quick transactions are achieved.

Furthermore, a server-side reader/writer module that is connected via the network, and a cache writer for writing data that is used on the IC module more frequently than a predetermined frequency to the IC module, may be provided, the server-side reader/writer module comprising a reader/writer encryption processor for controlling encryption of communication data exchanged with the IC module.

In that case, the reader/writer receives a response received from the IC module, and transfers encrypted response data as it is to the server-side reader/writer module via the network, and the response data is processed in the server-side reader/writer module.

The server-side reader/writer module is implemented, for example, by a server machine that is provided on a broadband network and that is capable of accessing the virtual memory module. When obtaining data held in the IC module, if an entity of data stored in the data storage unit of the IC module has been cached in the IC module, the server-side reader/writer module accesses the IC module via the reader/writer to obtain the entity of data from the data storage unit of the IC module. On the other hand, if an entity of data stored in the data storage unit of the IC module has not been cached in the IC module, the server-side reader/writer module accesses the virtual memory module via the network to obtain the entity of data from the data storage unit of the virtual memory module. After an ID has been exchanged with the IC module, an actual data entity in the virtual memory module is accessed by communications between high-end servers connected to each other via a broadband network. Thus, transactions end in a very short time.

A fifth aspect of the present invention is a data management method for managing data associated with IC modules between a first terminal and a second terminal each having an IC module mode for securely storing data and a reader/writer mode for securely accessing another IC module,
wherein data that is used on the IC module of each of the terminals is associated with unique identification data, the identification data associated with data on the IC module being managed on a database,
and wherein when data is transferred from the first terminal to the second terminal,
first identification data (ID1) of data to be transferred is obtained from the first terminal,
second identification data (ID2) for associating the data to be transferred is obtained from the second terminal,
and the data associated with ID1 is transferred to ID2 on the database.

Identification data herein refers to information for identifying an individual. The identification data may be an ID consisting of several bytes of data assigned to the individual, biometric information uniquely owned by the individual, such as a fingerprint, or the like.

When data is transferred from the first terminal to the second terminal, the first terminal operates in the reader/writer mode and the second terminal operates in the IC module mode, and' second identification data for associating the data to be transferred is read from the second terminal using a reader/writer function of the first terminal.

Furthermore, upon completion of data transfer on the database, the first terminal is notified of completion of data transfer, and the second terminal is notified, via the first terminal, of completion of data transfer.

Thus, with the data management method according to the fifth aspect of the present invention, secure exchange is allowed between two terminals without holding a secure memory having a large capacity.

Furthermore, in the data management method according to the fifth aspect of the present invention, when data is transferred from the first terminal to the second terminal, a price for the use of data transfer service may be charged to at least one of the first terminal and the second terminal.

Furthermore, in the data management method according to the fifth aspect of the present invention, when data is transferred from the first terminal to the second terminal, electronic money data stored in the second terminal may be decreased by a sum added by the data transfer and/or electronic money data stored in the first terminal may be increased, thereby settling a transaction of data transfer by electronic money.

Other objects, features, and advantages of the present invention will become apparent from the following detailed description of embodiments of the present invention with reference to the accompanying drawings.

### Brief Description of the Drawings

Fig. 1 is a schematic diagram showing the basic configuration of a data management system according to a first embodiment of the present invention.
Fig. 2 is a sequence diagram showing a procedure of operation for accessing an entity of data stored in an IC module 100 in the data management system according to the first embodiment of the present invention.
Fig. 3 is a flowchart showing a procedure of operation for allowing a reader/writer 200 to access an entity of data stored in the IC module 100.
Fig. 4 is a schematic diagram showing a modification of the data management system shown in Fig. 1.
Fig. 5 is a schematic diagram showing a modification of the data management system shown in Fig. 1.
Fig. 6 is a schematic diagram showing a modification of the data management system shown in Fig. 4.
Fig. 7 is a schematic diagram showing the basic configuration of a data management system according to a second embodiment of the present invention.
Fig. 8 is a flowchart showing a procedure of processing for allowing the reader/writer 200 to achieve quick transactions using data cached on the IC module 100.
Fig. 9 is a flowchart showing a procedure of processing for reflecting an updated state in the IC module 100 to corresponding data in the virtual memory module 300.
Fig. 10 is a diagram showing a sequence of operation that is executed among the IC module 100, the reader/writer 200, and the virtual memory module 300 for achieving quick transactions by caching data in a data storage unit 101 of the IC module 100.
Fig. 11 is a diagram showing a sequence of operation that is executed among the IC module 100, the reader/writer 200, and the virtual memory module 300 for achieving quick by caching data in the data storage unit 101 of the IC module 100.
Fig. 12 is a schematic diagram showing an image of using the IC module' 100 to cache data that is frequently used by a user.
Fig. 13 is a schematic diagram showing a modification of the data management system shown in Fig. 7.
Fig. 14 is a schematic diagram showing a modification of the data management system shown in Fig. 7.
Fig. 15 is a schematic diagram showing a modification of the data management system shown in Fig. 14.
Fig. 16 is a schematic diagram showing the configuration of a data management system according to a third embodiment of the present invention.
Fig. 17 is a schematic diagram showing the configuration of the data management system in which a terminal 100 is operating in a reader/writer mode.
Fig. 18 is a schematic diagram showing the configuration of a data management system in which a terminal 100A operates in a reader/writer mode and a terminal 100B operates in a card mode.
Fig. 19 is a diagram showing a sequence of operation for transferring data from the terminal 100A operating in the reader/writer mode to the terminal 100B operating in the card mode.
Fig. 20 is a diagram showing a system for collecting a charge for transferring data when data is transferred from the terminal 100A to the terminal 100B.
Fig. 21 is a schematic diagram showing a system for settling a transaction using electronic money when data is transferred from the terminal 100A to the terminal 100B.
Fig. 22 is a schematic diagram showing an example configuration of a system using an IC module (related art).

### Best Mode for Carrying Out the Invention

Now, embodiments of the present invention will be described in detail with reference to the drawings.

### A. First Embodiment

A first embodiment of the present invention is a system for securely managing user's data using an IC module. According to the first embodiment, a memory area that is limited in terms of hardware is virtually expanded so that the maximum memory capacity of the IC module becomes essentially unlimited.

### A-1. Embodiment 1-1

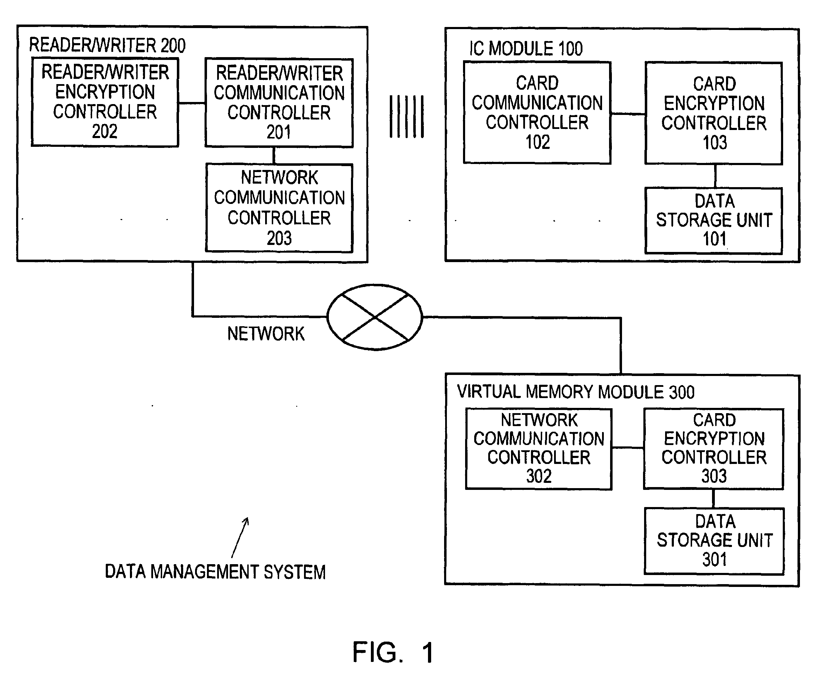

Fig. 1 schematically shows the basic configuration of a data management system according to the first embodiment of the present invention. As shown in the figure, the data management system includes an IC module 100 that is carried by a user and that securely holds particular data (value information or the like), a reader/writer 200 for accessing a memory space of the IC module 100 to read or write data, and a virtual memory module 300 that is connected to the reader/writer 200 via a network.

The IC module 100 includes a data storage unit 101, a card communication controller 102 for communicating with the reader/writer 200, and a card encryption controller 103 for controlling encryption of data exchanged with the reader/writer 200.

The IC module 100 is implemented, for example, in the form of a card, or is implemented in the form of a chip and is included in a small device such as a cellular phone or a PDA. The data storage unit 101 is a semiconductor memory, and the storage capacity thereof has an upper limit.

The reader/writer 200 includes a reader/writer communication controller 201 for communicating with the IC module 100, a reader/writer encryption controller 202 for controlling encryption of data exchanged with the IC module, and a network communication controller 203 for carrying out data communications via a network such as a TCP/IP network. The reader/writer 200 is implemented, for example, by a server machine that is provided on a broadband network and that is capable of accessing the IC module 100.

The respective communication controllers 102 and 201 of the IC module 100 and the reader/writer 200 connect to each other, for example,' in a contactless manner based on the principles of electromagnetic induction. The card communication controller 103 communicates with the reader/writer 200 by changing its load between antennas (not shown) based on a response signal to a query signal from the reader/writer 200 to amplitude-modulate a signal that appears in a receiver circuit of the reader/writer 200.

Obviously, connection between the IC module 100 and the reader/writer 200 is not limited to a contactless connection, and a connection may be formed by inserting the IC module 100 in a card slot of the reader/writer 200.

The virtual memory module 300 includes a data storage unit 301 for providing a virtual memory space for the IC module, a network communication controller for communicating with the reader/writer 200, and a card encryption controller 303 for controlling encryption of data exchanged with the reader/writer 200.

The respective network communication controllers 302 and 201 of the virtual memory module 300 and the reader/writer 200 form a network connection based on predetermined communication protocols, for example, TCP/IP.

The virtual memory module 300 is used to virtually expand a memory area in the data storage unit 101 of the IC module 100, which is limited in terms of hardware. The virtual memory module 300 itself is not carried for use by a user, so that it does not have hardware restrictions such as a card shape. Thus, the data storage unit 301 of the virtual memory module 300 is implemented using a large-capacity storage device such as a hard disk, and it operates as a virtual memory space of the data storage unit 101 of the IC module 100. Thus, the maximum memory capacity of the IC module 100 becomes essentially unlimited. The virtual memory module 300 is implemented, for example, by a server machine provided on a broadband network.

The data storage unit 101 of the IC module 100 stores an ID for identifying a data space of the module, and a link to data in the data storage unit of the virtual memory module 300 is formed based on the ID. Furthermore, in the data storage unit 101, a specific file structure is formed, and an upper limit value thereof is set. The upper limit value of the data storage unit 101 is linked to a file structure of the data storage unit 301 in the virtual memory module 300.

When communicating with the IC module 100, if an entity of data stored in the data storage unit 101 of the IC module 100 is not present in the IC module 100, the reader/writer 200 accesses the virtual memory module 300 via the network to obtain the entity of data from the data storage unit 301 of the virtual memory module 300.

One virtual memory module may be provided for each IC module. Alternatively, a virtual memory module may provide virtual memory spaces simultaneously for a plurality of IC modules. Obviously, one IC module may have virtual memory spaces in a plurality of virtual memory modules.

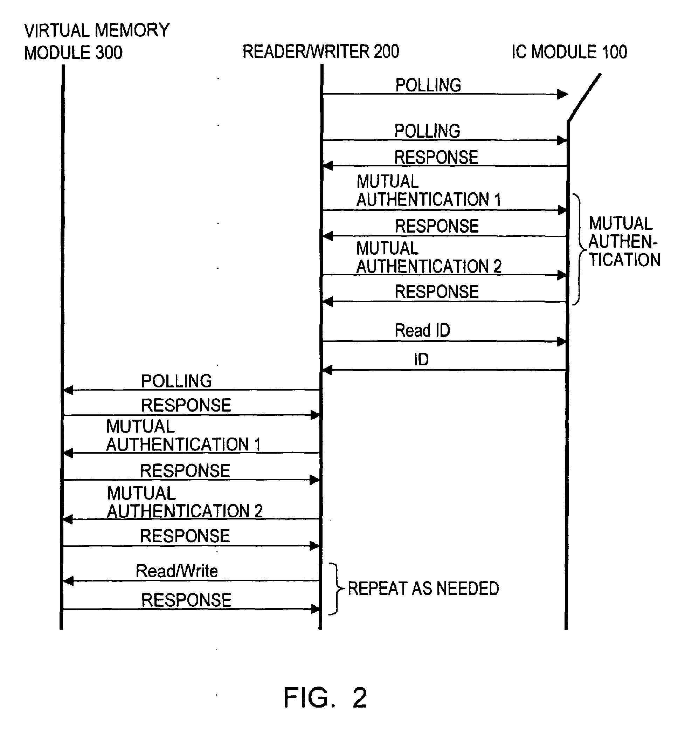

Fig. 2 shows a procedure of operation for accessing an entity of data stored in the IC module 100 in the data management system.

The communication controller 201 of the reader/writer 200 constantly polls the IC module 100.

When the IC module 100 is placed in sufficient proximity to the reader/writer 200, the card communication controller 102 is activated to allow connection based on electromagnetic induction. Then, the IC module 100 generates a response in the card encryption controller 103, and returns the response to the reader/writer 200.

Then, the IC module 100 and the reader/writer 200 execute procedures of mutual authentication and response at least once to establish mutual authentication and to share an encryption key, whereby secure data communications using encryption are allowed.

Furthermore, the reader/writer 200 reads an ID (ReadID) stored in the data storage unit 101 in the IC module 100, obtaining link information to a file structure in the data storage unit 301 in the virtual memory module 300.

In the data storage unit 101, a specific file structure is formed, and an upper limit value thereof is set. The upper limit value of the data storage unit 101 is linked to a file structure in the data storage unit 301 in the virtual memory module 300.

If an entity of data stored in the data storage unit 101 of the IC module 100 is not present in the IC module 100, the reader/writer 200 accesses the virtual memory module 300 via the network to obtain the entity of data from the data storage unit 301 of the virtual memory module 300.

More specifically, the reader/writer 200 polls the virtual memory module 300 via the network using the ID obtained from the IC module 100.

In response, the virtual memory module 300 generates a response in the card encryption controller 303, and returns the response to the reader/writer 200. Procedures of mutual authentication and response are executed at least once to establish mutual authentication and to share an encryption key, whereby secure data communications using encryption are allowed.

Then, the virtual memory module 300 and the reader/writer 200 execute procedures of mutual authentication and response at least once to establish mutual authentication and to share an encryption key, whereby secure data communications using encryption are allowed. In order to obtain an entity of desired data, the reader/writer 200 is allowed to repeat procedures of Read or Write access and response thereto with the virtual memory module 300 as many times as needed.

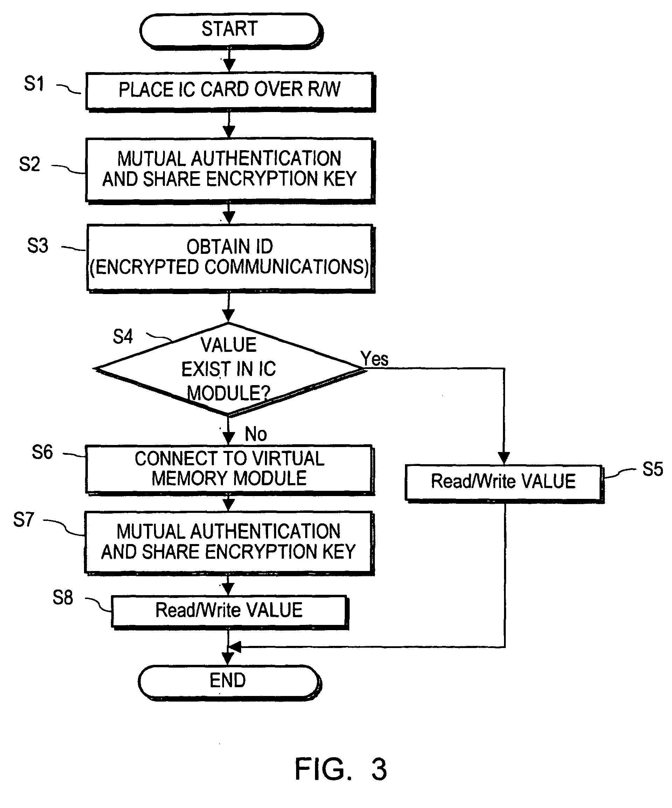

Fig. 3 is a flowchart showing a procedure of operation for allowing the reader/writer 200 to access an entity of data stored in the IC module 100.

When the IC module 100 is placed over the reader/writer 200, the card communication controller 102 is activated, whereby a contactless connection based on electromagnetic induction is established (step S1). The IC module 100 generates a response in the card encryption controller 103, and returns the response to the reader/writer 200.

Then, the IC module 100 and the reader/writer 200 execute procedures of mutual authentication and response at least once to establish mutual authentication and to share an encryption key (step S2), whereby secure data communications using encryption are allowed.

Furthermore, the reader/writer 200 reads an ID (ReadID) stored in the data storage unit 101 in the IC module 100, obtaining link information to a file structure in the data storage unit 301 in the virtual memory module 300 (step S3).

Then, it is determined whether value information (value) such as electronic money or electronic ticket, or other desired data, is present in the data storage unit 101 in the IC module 100 (step S4).

If desired data is present in the data storage unit 101 in the IC module 100, the reader/writer 200 repeats procedures of Read or Write access and response thereto with the IC module 100 as many times as needed to obtain the desired data (step S5).

In the data storage unit 101, a specific data structure is formed, and an upper limit value thereof is set. The upper limit value of the data storage unit 101 is linked to a file structure in the data storage unit 301 in the virtual memory module 300.

Thus, if desired data is not present in the data storage unit 101 in the IC module 100, the reader/writer 200 connects to the virtual memory module 300 by the network communication controller 203 via the network (step S6), and executes procedures of mutual authentication and response at least once to establish mutual authentication and to share an encryption key (step S7).

Then, the reader/writer 200 repeats procedures of Read or Write access and response thereto with the virtual memory module 300 as many times as needed using the ID obtained from the IC module 100, obtaining the desired data from the data storage unit 301 of the virtual memory module 300 (step S8).

In this embodiment, when an ID or the like is transmitted in communications between the IC module 100 and the reader/writer 200, encrypted communication is carried out based on an existing sequence of IC module communications. Furthermore, the reader/writer 200 accesses the virtual memory module 300 on behalf of the IC module 100 to access relevant data. The virtual memory module 300 is accessed by encrypted communication based on an existing sequence of network communications, such as TCP/IP protocols.

After an ID has been communicated with the IC module 100, the reader/writer 200 accesses an actual data entity in the virtual memory module 300 by communications between high-end servers connected to each other via a broadband network, so that transactions end in a very short time. (On the other hand, a communication environment where a common IC module is used is restricted by the operating speed of an 8-bit CPU of the IC module, so that the bandwidth of communications with a reader/writer is on the order of 200 Kbps.)

### A-2. Embodiment 1-2:

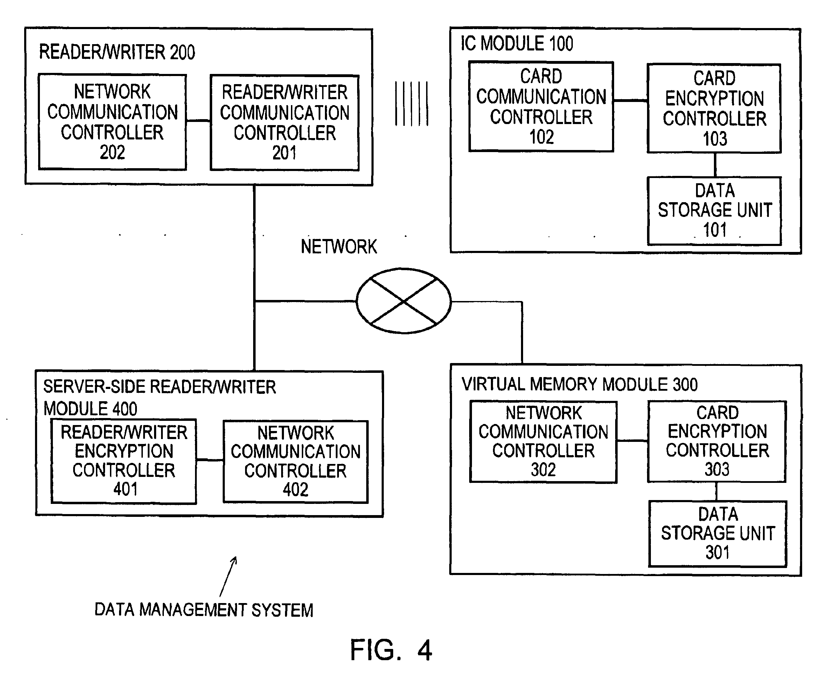

Fig. 4 schematically shows a modification of the data management system shown in Fig. 1. In the embodiment shown in Fig. 1, the reader/writer 200 that is capable of accessing an IC module also supports networking so that the reader/writer 200 can also access the virtual memory module 300. In contrast, in the embodiment shown in Fig. 4, a reader/writer 200 does not support networking, and the reader/writer 200 accesses data that is held in an IC module 100 under the control of a server 400 provided on a network. A memory module 300 is accessed by the server 400 via the network.

As shown in Fig. 4, the data management system includes an IC module 100 that is carried by a user and that securely holds particular data (value information or the like), a reader/writer 200 for accessing a memory space of the IC module 100 to read or write data, a virtual memory module 300 that is connected via a network, and a server-side reader/writer module 400 that is capable of communicating with the reader/writer 200 and that accesses a memory space of the virtual memory module 300 to read or write data.

The IC module 100 includes a data storage unit 101, a card communication controller 102 for communicating with the reader/writer 200, and a card encryption controller 103 for controlling encryption of data exchanged with the reader/writer 200.

The IC module 100 is implemented, for example, in the form of a card, or is implemented in the form of a chip and is included in a small device such as a cellular phone or a PDA. The data storage unit 101 is a semiconductor memory, and the storage capacity thereof has an upper limit.

The reader/writer 200 includes a reader/writer communication controller 201 for communicating with the IC module 100, and a reader/writer encryption controller 202 for controlling encryption of data exchanged with the IC module.

The respective communication controllers 102 and 201 of the IC module 100 and the reader/writer 200 connect to each other, for example, in a contactless manner based on the principles of electromagnetic induction. The card communication controller 103 communicates with the reader/writer 200 by changing its load between antennas (not shown) based on a response signal to a query signal from the reader/writer 200 to amplitude-modulate a signal that appears in a receiver circuit of the reader/writer 200. Obviously, connection between the IC module 100 and the reader/writer 200 i's not limited to a contactless connection, and a connection may be formed by inserting the IC module 100 in a card slot of the reader/writer 200.

The virtual memory module 300 includes a data storage unit 301 for providing a virtual memory space for the IC module, a network communication controller 302 for communicating with the reader/writer 200, and a card encryption controller for controlling encryption of data exchanged with the reader/writer 200.

The virtual memory module 300 is used to virtually expand a memory area in the data storage unit 101 of the IC module 100, which is limited in terms of hardware. The virtual memory module 300 itself is not carried for use by a user, so that it does not have hardware restrictions such as a card shape. Thus, the data storage unit 301 of the virtual memory module 300 is implemented using a large-capacity storage device such as a hard disk, and it operates as a virtual memory space of the data storage unit 101 of the IC module 100. Thus, the maximum memory capacity of the IC module 100 becomes essentially unlimited. The virtual memory module 300 is implemented, for example, by a server machine provided on a broadband network.

The server-side reader/writer module 400 includes a reader/writer encryption controller 401 for carrying out encrypted communications with the reader/writer, and a network communication controller 402 for carrying out data communications via a network such as a TCP/IP network. The server-side reader/writer module 400 is implemented, for example, by a server machine that is provided on a broadband network and that is capable of accessing the virtual memory module 300.

The respective network communication controllers 302 and 402 of the virtual memory module 300 and the server-side reader/writer module 400 form a network connection based on predetermined communication protocols, for example, TCP/IP.

The data storage unit 101 of the IC module 100 stores an ID for identifying a data space of the module, and a link to data in the data storage unit of the virtual memory module 300 is formed based on the ID. Furthermore, in the data storage unit 101, a specific file structure is formed, and an upper limit value thereof is set. The upper limit value of the data storage unit 101 is linked to a file structure in the data storage unit 301 in the virtual memory module 300.

When obtaining data held in the IC module 100, if an entity of data stored in the data storage unit 101 of the IC module 100 is present in the IC module 100, the server-side reader/writer module 400 accesses the IC module 100 via the reader/writer 200 to obtain the entity of data from the data storage unit 101 of the IC module 100. On the other hand, if an entity of data stored in the data storage unit 101 of the IC module 100 is not present in the IC module 100, the server-side reader/writer module 400 accesses the virtual memory module 300 via the network to obtain the entity of data from the data storage unit 301 of the virtual memory module 300.

### A-3. Embodiment 1-3:

According to the present invention, virtual transactions with the virtual memory module 300 are executed so that a memory area in the IC module 100, which is limited in terms of hardware, is virtually expanded. Thus, the maximum memory capacity of the IC module 100 becomes essentially unlimited.

The virtual transactions with the virtual memory module 300 are executed by cooperative operations of the reader/writer encryption controller 202 in the reader/writer 200 (or the reader/writer encryption controller 401 in the server-side reader/writer module 400) and the card encryption controller 303 in the virtual memory module 300.

The cooperative operations for executing virtual transactions are usually implemented in the form of transaction executing programs executed by the respective modules. It is possible to virtually extend fixed programs of the IC module 100 if the transaction executing programs can be upgraded.

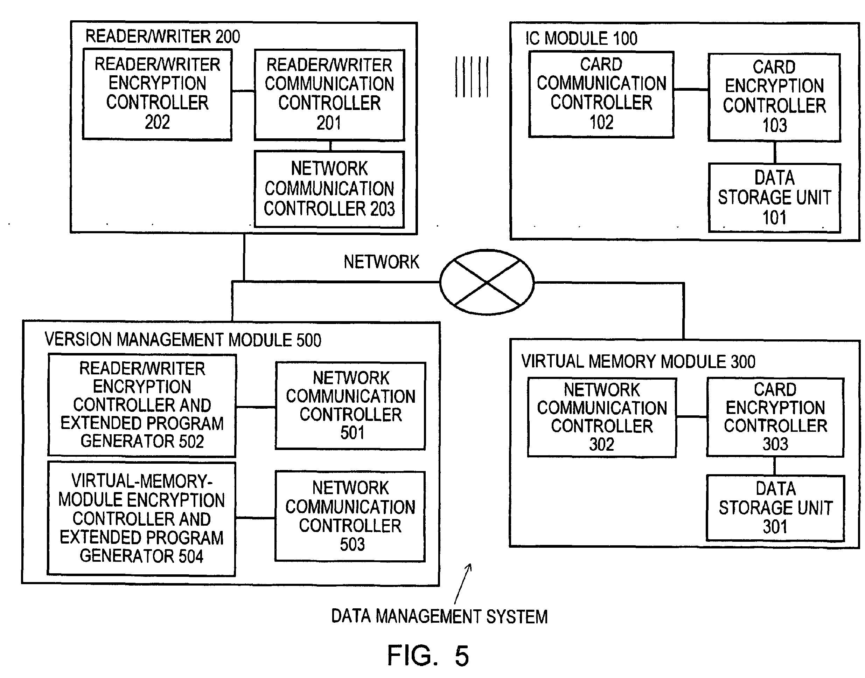

Fig. 5 schematically shows a modification of the data management system shown in Fig. 1. In the embodiment shown in the figure, a version management module 500 manages virtual-transaction executing programs executed by a reader/writer encryption controller 202 of a reader/writer encryption controller 202 and a card encryption controller 303 of a virtual memory module 300.

As shown in Fig. 5, the data management system includes an IC module 100 that is carried by a user and that securely holds particular data (value information or the like), a reader/writer 200 for accessing a memory space of the IC module 100 to read or write data, a virtual memory module 300 that is connected via a network, and a version management module 500 for managing virtual-transaction executing programs for the virtual memory module 300.

The IC module 100 includes a data storage unit 101, a card communication controller 102 for communicating with the reader/writer 200, and a card encryption controller 103 for controlling encryption of data exchanged with the reader/writer 200.

The IC module 100 is implemented, for example, in the form of a card, or is implemented in the form of a chip and is included in a small device such as a cellular phone or a PDA. The data storage unit 101 is a semiconductor memory, and the storage capacity thereof has an upper limit.

The reader/writer 200 includes a reader/writer communication controller 201 for communicating with the IC module 100, a reader/writer encryption controller 202 for controlling encryption of data exchanged with the IC module, and a network communication controller 203 for carrying out data communications via a network such as a TCP/IP network. The reader/writer 200 is implemented, for example, by a server machine that is provided on a broadband network and that is capable of accessing the IC module 100.

The respective communication controllers 102 and 201 of the IC module 100 and the reader/writer 200 connect to each other, for example, in a contactless manner based on the principles of electromagnetic induction. The card encryption controller 103 communicates with the reader/writer 200 by changing its load between antennas (not shown) based on a response signal to a query signal from the reader/writer 200 to amplitude-modulate a signal that appears in a receiver circuit of the reader/writer 200.

The virtual memory module 300 includes a data storage unit 301 for providing a virtual memory space for the IC module, a network communication controller 302 for communicating with the reader/writer 200, and a card encryption controller for controlling encryption of data exchanged with the reader/writer 200.

The respective network communication controllers 302 and 201 of the virtual memory module 300 and the reader/writer 200 form a network connection based on predetermined communication protocols, for example, TCP/IP.

The virtual memory module 300 is used to virtually expand a memory area in the data storage unit 101 of the IC module 100, which is limited in terms of hardware. The virtual memory module 300 itself is not carried for use by a user, so that it does not have hardware restrictions such as a card shape. Thus, the data storage unit 301 of the virtual memory module 300 is implemented using a large-capacity storage device such as a hard disk, and it operates as a virtual memory space of the data storage unit 101 of the IC module 100. Thus, the maximum memory capacity of the IC module 100 becomes essentially unlimited. The virtual memory module 300 is implemented, for example, by a server machine provided on a broadband network.

The data storage unit 101 of the IC module 100 stores an ID for identifying a data space of the module, and a link with data in the data storage unit of the virtual memory module 300 is formed based on the ID. Furthermore, in the data storage unit 101, a specific file structure is formed, and an upper limit value thereof is set. The upper limit value of the data storage unit 101 is linked to a file structure in the data storage unit 301 in the virtual memory module 300.

When communicating with the IC module 100, if an entity of data stored in the data storage unit 101 of the IC module 100 is not present in the IC module 100, the reader/writer 200 accesses the virtual memory module 300 via the network to obtain the entity of data from the data storage unit 301 of the virtual memory module 300.

The version management module 500 includes a network communication controller 501 for connecting to the reader/writer 200 via a network, a reader/writer encryption controller and extended program generator 502 for controlling encrypted communications with the reader/writer 200 and for generating an extended program of a virtual-transaction executing program for the reader/writer 200, a network communication controller 503 for connecting to the virtual memory module 300 via a network, and a virtual-memory-module encryption controller and extended program generator 504 for controlling encrypted communications with the virtual memory module 300 and for generating an extended program of a virtual-transaction executing program for the virtual memory module 300.

The version management module described above is provided on a network, and respective upgrading programs for the reader/writer encryption controller 202 and the card encryption controller 303 are generated and stored, and are transferred to the reader/writer 200 and the virtual memory module 300 at an appropriate timing.

The IC module 100 and the reader/writer 200 communicate with each other by a sequence using existing programs (corresponding to a handshake for communication). In subsequent communications between the reader/writer 200 and the virtual memory module 300, transactions are executed based on an extended sequence using upgraded programs.

Thus, without changing the version of the IC module 100, in communications between the reader/writer 200 and the virtual memory module 300 after an ID has been obtained from the IC module 100, an extended sequence can be executed. That is, the effect is essentially the same as in a case where a program of the IC module 100 is upgraded.

Furthermore, processing with a large load that cannot be handled by the performance of the IC module 100 can be executed by a server.

Furthermore, when a service entity wishes to extend a function of the IC module 100 only for the sake of its own service, a unique service can be implemented at a low cost by using the existing IC module 100 as it is and upgrading the version of a program of the virtual memory module. In contrast, it incurs a very high cost to develop a proprietary IC module.

### A-4. Embodiment 1-4:

Cooperative operations for executing virtual transactions with a virtual memory module are usually implemented in the form of transaction executing programs executed by respective modules. A fixed program of an IC module 100 can be virtually extended if the transaction executing programs can be upgraded.

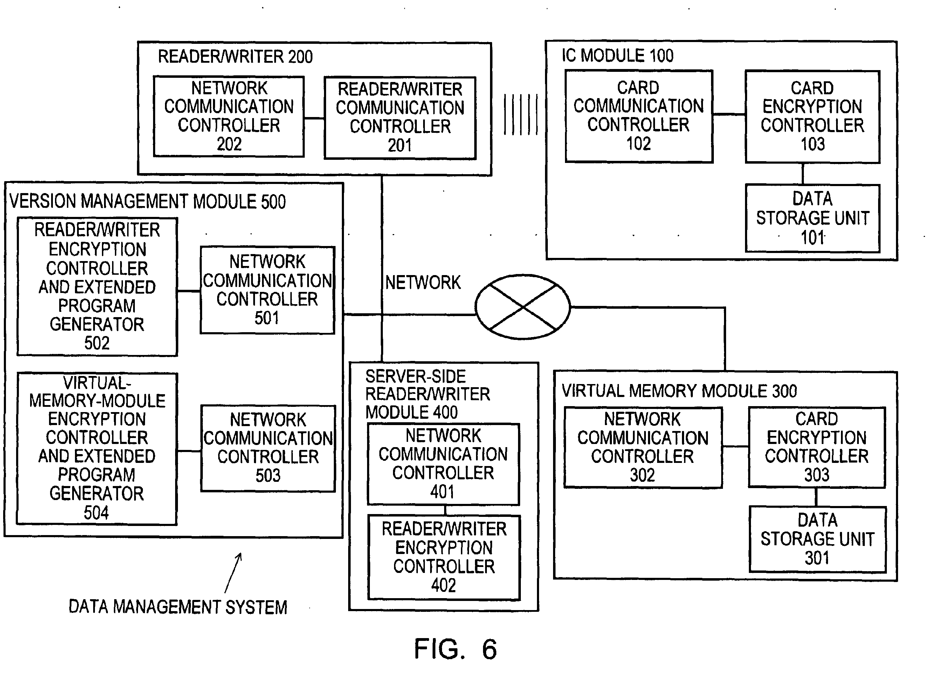

Fig. 6 schematically shows a modification of the data management system shown in Fig. 4. In the embodiment shown in the figure, a reader/writer 200 does not support networking, and it accesses data held in the IC module 100 under the control of a server 400 on a network, and a virtual memory module 300 is accessed by the server 400 via the network. Furthermore, a version management module 500 manages virtual-transaction executing programs executed by a reader/writer encryption controller 202 in the reader/writer 200 and a card encryption controller 303 in the virtual memory module 300.

As shown in Fig. 4, the data management system includes an IC module 100 that is carried by a user and that securely holds particular data (value information or the like), a reader/writer 200 for accessing a memory space of the IC module 100 to read or write data, a virtual memory module 300 that is connected via a network, a server-side reader/writer module 400 that is capable of communicating with the reader/writer 200 and that accesses a memory space of the virtual memory module 300 to read or write data, and a version management module 500 for managing virtual-transaction executing programs for the virtual memory module 300.

The IC module 100 includes a data storage unit 101, a card communication controller 102 for communicating with the reader/writer 200, and a card encryption controller 103 for controlling encryption of data exchanged with the reader/writer 200.

The IC module 100 is implemented, for example, in the form of a card, or is implemented in the form of a chip and is included in a small device such as a cellular phone or a PDA. The data storage unit 101 is a semiconductor memory, and the storage capacity thereof has an upper limit.

The reader/writer 200 includes a reader/writer communication controller 201 for communicating with the IC module 100, and a reader/writer encryption controller 202 for controlling encryption of data exchanged with the IC module.

The respective communication controllers 102 and 201 of the IC module 100 and the reader/writer 200 connect to each other, for example,' in a contactless manner based on the principles of electromagnetic induction. The card encryption controller 103 communicates with the reader/writer 200 by changing its load between antennas (not shown) based on a response signal to a query signal from the reader/writer 200 to amplitude-modulate a signal that appears in a receiver circuit of the reader/writer 200.

The virtual memory module 300 includes a data storage unit 301 for providing a virtual memory space for the IC module, a network communication controller 302 for communicating with the reader/writer 200, and a card encryption controller 303 for controlling encryption of data exchanged with the reader/writer 200.

The virtual memory module 300 is used to virtually expand a memory area in the data storage unit 101 of the IC module 100, which is limited in terms of hardware. The virtual memory module 300 itself is not carried for use by a user, so that it does not have hardware restrictions such as a card shape. Thus, the data storage unit 301 of the virtual memory module 300 is implemented using a large-capacity storage device such as a hard disk, and it operates as a virtual memory space of the data storage unit 101 of the IC module 100. Thus, the maximum memory capacity of the IC module 100 becomes essentially unlimited. The virtual memory module 300 is implemented, for example, by a server machine provided on a broadband network.

The server-side reader/writer 400 includes a reader/writer encryption controller 401 for carrying out encrypted communications with the reader/writer, and a network communication controller 402 for carrying out data communications via a network such as a TCP/IP network. The reader/writer 200 is implemented, for example, by a server machine provided on a broadband network and that is capable of accessing the virtual memory module 300.

The respective network communication controllers 302 and 402 of the virtual memory module 300 and the server-side reader/writer 400 form a network connection based on predetermined communication protocols, for example, TCP/IP.

The data storage unit 101 of the IC module 100 stores an ID for identifying a data space of the module, and a link to data in the data storage unit of the virtual memory module 300 is formed based on the ID. Furthermore, in the data storage unit 101, a specific file structure is formed, and an upper limit value thereof is set. The upper limit value of the data storage unit 101 is linked to a file structure in the data storage unit 301 in the virtual memory module 300.

When obtaining data held in the IC module 100, if an entity of data stored in the data storage unit 101 of the IC module 100 is present in the IC module 100, the server-side reader/writer module 400 accesses the IC module 100 via the reader/writer 200 to obtain the entity of data from the data storage unit 101 of the IC module 100. On the other hand, if an entity of data stored in the data storage unit 101 of the IC module 100 is not present in the IC module 100, the server-side reader/writer module 400 accesses the virtual memory module 300 via the network to obtain the entity of data from the data storage unit 301 of the virtual memory module 300.

The version management module 500 includes a network communication controller 501 for connecting to the reader/writer 200 via a network, a reader/writer encryption controller and extended program generator 502 for controlling encrypted communications with the reader/writer 200 and for generating an extended program of a virtual-transaction executing program for the reader/writer 200, a network communication controller 503 for connecting to the virtual memory module 300 via a network, and a virtual-memory-module encryption controller and extended program generator 504 for controlling encrypted communication with the virtual memory module 300 and for generating an extended program of a virtual-transaction executing program for the virtual memory module 300.

The version management module described above is provided on a network, and respective upgrading programs for the reader/writer encryption controller 202 and the card encryption controller 303 are generated and stored, and transferred to the reader/writer 200 and the virtual memory module 300 at an appropriate timing.

The IC module 100 and the reader/writer 200 communicate with each other by a sequence using existing programs (corresponding to a handshake for communication). In subsequent communications between the reader/writer 200 and the virtual memory module 300, transactions are executed by an extended sequence according to upgraded programs.

Thus, without changing the version of the IC module 100, in communications between the reader/writer 200 and the virtual memory module 300 after an ID has been obtained from the IC module 100, an extended sequence can be executed. That is, the effect is essentially the same as in a case where a program of the IC module 100 is upgraded.

Furthermore, processing with a large load that cannot be handled by the performance of the IC module 100 can be executed by a server.

Furthermore, when a service entity wishes to extend a function of the IC module 100 only for the sake of its own service, a unique service can be implemented at a low cost by using the existing IC module 100 as it is and upgrading the version of a program of the virtual memory module.

### B. Second Embodiment

According to a second embodiment of the present invention, in order to virtually expand a memory area in a data storage unit of an IC module, which is limited in terms of hardware, a virtual memory module is provided externally to the IC module (e.g., on a network).

The virtual memory module itself is not carried for use by a user, and it does not have hardware restrictions such as a card shape. Thus, the data storage unit thereof is implemented using a large-capacity storage device such as a hard disk, and it operates as a virtual memory space of the data storage unit of the IC module. The virtual memory module is implemented, for example, by a server machine provided on a broadband network. Thus, by executing virtual transactions with the virtual memory module, a memory area in the IC module, which is limited in terms of hardware, is virtually expanded. Thus, the maximum memory capacity of the IC module becomes essentially unlimited.

Furthermore, according to the second embodiment of the present invention, when a virtual memory module that operates as a server is used, by caching data in an existing IC module, desired data that has been cached can be accessed quickly.

### B-1. Embodiment 2-1:

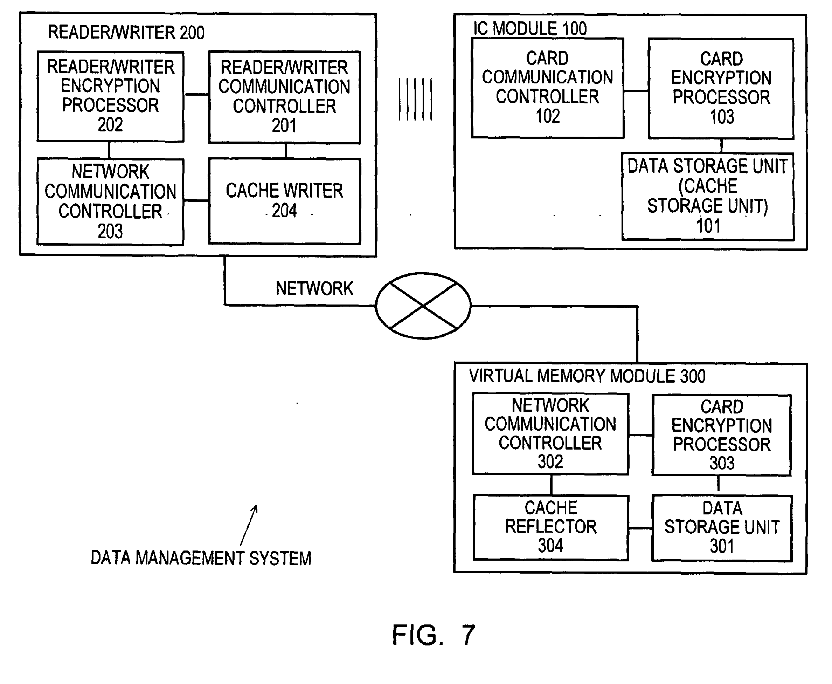

Fig. 7 schematically shows the basic configuration of a data management system according to an embodiment of the present invention. As shown in the figure, the data management system includes an IC module 100 that is carried by a user and that securely holds particular data (value information or the like), a reader/writer 200 for accessing a memory space of the IC module 100 to read or write data, and a virtual memory module 300 that is connected to the reader/writer 200 via a network.

The IC module 100 includes a data storage unit 101, a card communication controller 102 for communicating with the reader/writer 200, and a card encryption controller 103 for controlling encryption of data exchanged with the reader/writer 200.

The IC module 100 is implemented, for example, in the form of a card, or is implemented in the form of a chip and is included in a small device such as a cellular phone or a PDA. The data storage unit 101 is a semiconductor memory, and the storage capacity thereof has an upper limit. In this embodiment, the data storage unit 101 is used as a cache for temporarily storing data (value information or the like) that is frequently accessed.

The reader/writer 200 includes a reader/writer communication controller 201 for communicating with the IC module 100, a reader/writer encryption controller 202 for controlling encryption of data exchanged with the IC module, a network communication controller 203 for carrying out data communications via a network such as a TCP/IP network, and a cache writer 204 for writing data to be cached to the data storage unit 101 in the IC module 100. The reader/writer 100 is implemented, for example, by a server machine that is provided on a broadband network and that is capable of accessing the IC module 100.

The respective communication controllers 102 and 201 of the IC module 100 and the reader/writer 200 connect to each other, for example, in a contactless manner based on the principles of electromagnetic induction. The card encryption controller 103 communicates with the reader/writer 200 by changing its load between antennas (not shown) based on a response signal to a query signal from the reader/writer 200 to amplitude-modulate a signal that appears in a receiver circuit of the reader/writer 200.

Obviously, connection between the IC module 100 and the reader/writer 200 is not limited to a contactless connection, and a connection may be formed by inserting the IC module 100 in a card slot of the reader/writer 200.

The virtual memory module 300 includes a data storage unit 301 for providing a virtual memory space for the IC module, a network communication controller 302 for communicating with the reader/writer 200, a card encryption controller 303 for controlling encryption of data exchanged with the reader/writer 200, and a cache reflector 304 for reflecting an updated state of cache data in the data storage unit 101 in the IC module 100 to corresponding data in the data storage unit 301.

The respective network communication controllers 302 and 201 of the virtual memory module 300 and the reader/writer 200 form a network connection based on predetermined communication protocols, for example, TCP/IP.

The virtual memory module 300 is used to virtually expand a memory area for holding data (value information such as electronic money or electronic ticket) in the IC module 100, which is limited in terms of hardware. The virtual memory module 300 itself is not carried for use by a user, so that it does not have hardware restrictions such as a card shape. Thus, the data storage unit 303 thereof is implemented using a large-capacity storage device such as a hard disk, and it operates as a virtual memory space of the data storage unit 101 of the terminal 100 as an IC module. Thus, the maximum memory capacity of the IC module becomes essentially unlimited. The virtual memory module 300 is implemented, for example, by a server machine provided on a broadband network.

The data storage unit 101 of the IC module 100 stores an ID for identifying a data space of the module, and a link with data in the data storage unit of the virtual memory module 300 is formed based on the ID. Furthermore, in the data storage unit 101, a specific file structure is formed, and an upper limit value thereof is set. The upper limit value of the data storage unit 101 is linked to a file structure in the data storage unit 301 in the virtual memory module 300.

When communicating with the IC module 100, if an entity of data stored in the data storage unit 101 of the IC module 100 is not cached in the IC module 100, the reader/writer 200 accesses the virtual memory module 300 via the network to obtain the entity of data from the data storage unit 301 of the virtual memory module 300.

One virtual memory module may be provided for each IC module. Alternatively, a single virtual memory module may provide virtual memory spaces simultaneously for a plurality of IC modules. Obviously, a single IC module may have virtual memory spaces in a plurality of virtual memory modules.

When the data storage unit 101 in the IC module 100 is used as a cache, the cache writer 204 of the reader/writer 200 checks a memory space in the IC module 100, and obtains an ID thereof if a 'capacity that allows caching data remains. Then, the cache writer 204 obtains data corresponding to the ID from the virtual memory module among data to be cached, and stores the data in the data storage unit 101 in the IC module 100.

Furthermore, a cache selecting user interface (not shown) for allowing a user to specify data to be cached may be provided. This allows the user to select specific value information that is frequently used, such as electronic money or electronic ticket, and to hold the value information in the IC module 100. In that case, by user-driven caching of data that is frequently used, desired data can be used without connecting to the virtual memory module 300, so that quick transactions are achieved. No particular limitation exists as to where the cache selecting user interface is provided, and the cache selecting user interface may be provided in, for example, the IC module 100, the reader/writer 200, or the virtual memory module 300.

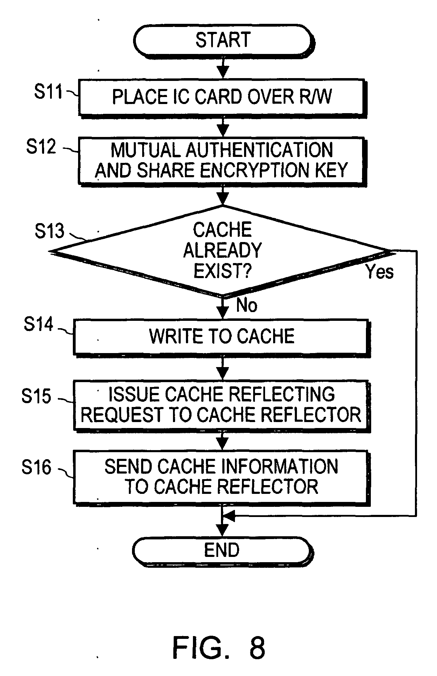

Fig. 8 is a flowchart showing a procedure of processing for achieving quick transactions by the reader/writer 200 using data cached on the IC module 100.

When the IC module 100 is placed over the reader/writer 200, the card communication controller 102 is activated, whereby a contactless connection based on electromagnetic induction is established (step S11). The IC module 100 generates a response in the card encryption controller 103, and returns the response to the reader/writer 200.

Then, the IC module 100 and the reader/writer 200 execute procedures of mutual authentication and response at least once to establish mutual authentication and to share an encryption key (step S12), whereby secure data communications using encryption are allowed.

When the data storage unit 101 in the IC module 100 is used as a cache, the cache writer 204 of the reader/writer 200 checks a memory space in the IC module 100 (step S13).

If a cache already exists in the data storage unit 101 in the IC module 100, the cache writer 204 directly writes to the cache (step S14). Thus, data can be updated without connecting to the virtual memory module 300 on the network, so that quick transactions are achieved.

When data cached in the IC module 100 has been updated in the manner described above, then, a cache reflecting request is issued to the cache reflector 304 of the virtual memory module 300 to ensure consistency of cache data (step S15), and the updated status in the IC module 100 is sent to the cache reflector 304 as cache information (step S16).

When using data that has been cached in the manner described above, the user places the IC module 100 over the reader/writer 200 to establish a contactless connection. Then, the reader/writer 200 checks whether the data is present in the data storage unit 101, and executes transactions if the presence of the data has been confirmed, updating the data in the data storage unit 101.

Furthermore, upon confirming that the data in the IC module 100 has been updated, the reader/writer 200 starts accessing the virtual memory module 300, and reflects the updated status in the IC module 100 to corresponding data in the virtual memory module 300, thereby ensuring consistency of cache data.

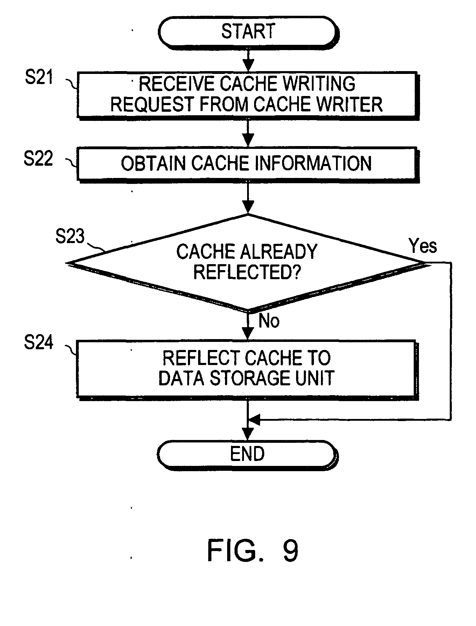

Fig. 9 is a flowchart showing a procedure of processing for reflecting an updated state in the IC module 100 to corresponding data in the virtual memory module 300.

When a cache reflecting request is received from the cache writer 204 of the reader/writer 200 (step S21), then, an updated state in the IC module 100 is received as cache information (step S22).

Then, the cache reflector 304 checks whether the updated state of the cache in the IC module 100 has been reflected to corresponding data stored in the data storage unit 301 in the virtual memory module 300 (step S23).

If the updated state of the cache has not yet been reflected to corresponding data stored in the data storage unit 301, the cache reflector 304 reflects the cache to the data storage unit 301 (step S24).

The cache reflecting operation is executed independently from processing executed when the user places the IC module 100 over the reader/writer 200 to use cache data, so that the speed of transactions is not compromised.

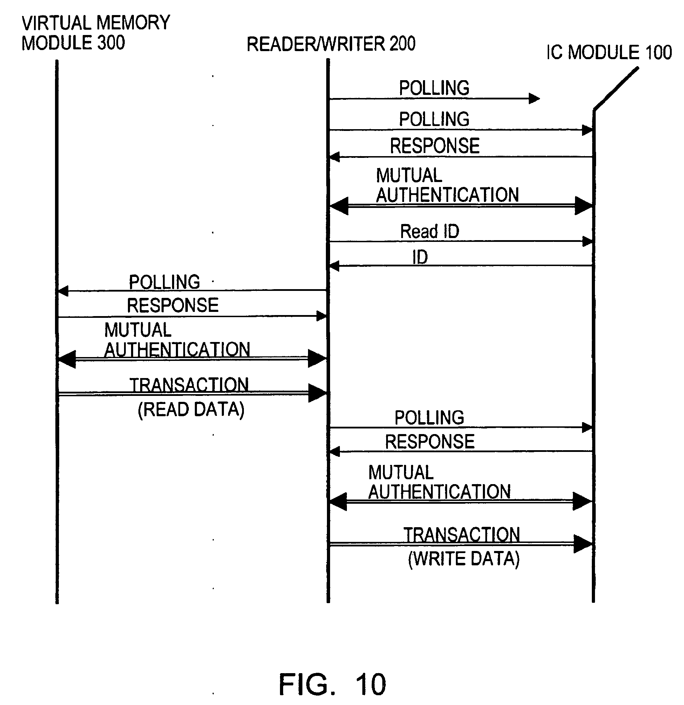

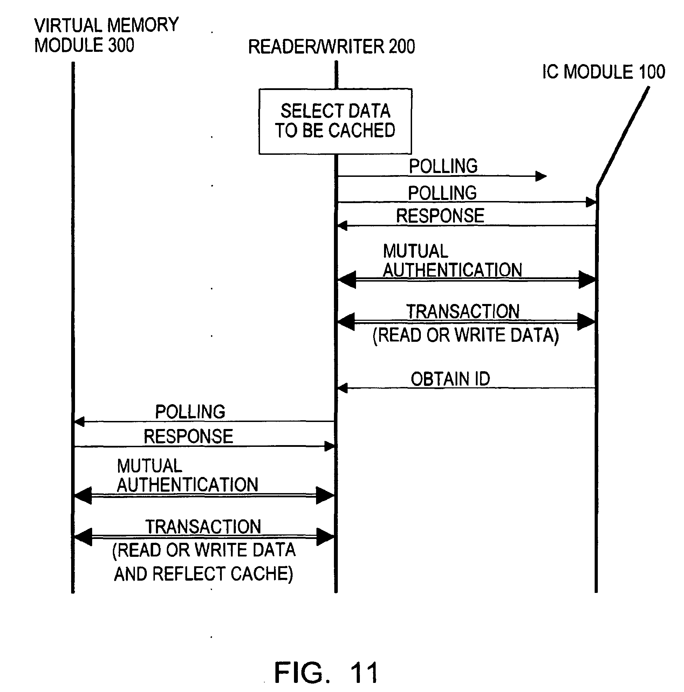

Figs. 10 and 11 show sequences of operation executed among the IC module 100, the reader/writer 200, and the virtual memory module 300 for achieving quick transactions by caching data in the data storage unit 101 of the IC module 100. Fig. 10 shows a cache storing sequence, and Fig. 11 shows a cache reflecting sequence.

In the cache storing sequence, the communication controller 201 of the reader/writer 200 constantly polls the IC module 100. When the IC module 100 is placed in sufficient proximity to the reader/writer 200, the card communication controller 102 is activated, whereby a connection based on electromagnetic induction is allowed. The IC module 100 generates a response in the card encryption controller 103, and returns the response to the reader/writer 200.

Then, the IC module 100 and the reader/writer 200 execute procedures of mutual authentication and response at least once to establish mutual authentication and to share an encryption key, whereby secure data communications using encryption are allowed.

The reader/writer 200 reads an ID (ReadID) stored in the data storage unit 101 in the IC module 100, obtaining link information to a file structure in the data storage unit 301 in the virtual memory module 300.

In the data storage unit 101, a specific file structure is formed, and an upper limit value thereof is set. The upper limit value of the data storage unit 101 is linked to a file structure in the data storage unit 301 in the virtual memory module 300.

If an entity of data stored in the data storage unit 101 of the IC module 100 is not present in the IC module 100, the reader/writer 200 accesses the virtual memory module 300 via the network to obtain the entity of data from the data storage unit 301 of the virtual memory module 300.

More specifically, the reader/writer 200 polls the virtual memory module 300 via the network, using an ID obtained from the IC module 100.

In response, the virtual memory module 300 generates a response in the card encryption controller 303, and returns the response to the reader/writer 200. By executing procedures of mutual authentication and response at least once, mutual authentication is established and an encryption key is shared, whereby secure data communications using encryption are allowed.

Then, the virtual memory module 300 and the reader/writer 200 execute procedures of mutual authentication and response at least once to establish mutual authentication and to share an encryption key, whereby secure data communications using encryption are allowed. The reader/writer 200 repeats procedures of Write access and response thereto with the virtual memory module 300 as many times as needed to obtain an entity of desired data.

Then, the IC module 100 is placed in sufficient proximity to the reader/writer 200. The communication controller 201 of the reader/writer 200 constantly polls the IC module 100. The card communication controller 102 is activated, whereby a connection based on electromagnetic induction is allowed. The IC module 100 generates a response in the card encryption controller 103, and returns the response to the reader/writer 200.

Then, the IC module 100 and the reader/writer 200 execute procedures of mutual authentication and response at least once to establish mutual authentication and to share an encryption key, whereby secure data communications using encryption are allowed. Then, the cache writer 204 writes desired data to the data storage unit 101.

In the cache reflecting sequence, first, a user selects data to be cached, using a cache selecting user interface on the reader/writer 200. Note, however, that no particular limitation exists as to where the cache selecting user interface is provided, and the cache selecting user interface may be provided in the IC module 100 or the virtual memory module 300 instead of the reader/writer 200.

The communication controller 201 the reader/writer 200 constantly polls the IC module 100.

When the IC module 100 is placed in sufficient proximity to the reader/writer 200, the card communication controller 102 is activated, whereby a connection based on electromagnetic induction is allowed. Then, the IC module 100 generates a response in the card encryption controller 103, and returns the response to the reader/writer 200.

Then, the IC module 100 and the reader/writer 200 execute procedures of mutual authentication and response at least once to establish mutual authentication and to share an encryption key, whereby secure data communications using encryption are allowed.

Then, the cache writer 204 checks a memory space in the IC module 100. If a cache already exists in the data storage unit 101 of the IC module 100, the cache writer 204 directly writes to the cache.

Furthermore, the reader/writer 200 reads an ID (ReadID) stored in the data storage unit 101 of the IC module 100, obtaining an ID that serves as link information to a file structure in the data storage unit 301 in the virtual memory module 300.

Then, the reader/writer 200 polls the virtual memory module 300 via the network, using the ID obtained from the IC module 100.

In response to the polling, the virtual memory module 300 generates a response in the card encryption controller 303, and returns the response to the reader/writer 200. By executing procedures of mutual authentication and response at least once, mutual authentication is established and an encryption key is shared, whereby secure data communications using encryption are allowed.

In order to ensure consistency of cache data, the cache writer 204 of the reader/writer 200 issues a cache reflecting request to the cache reflector 304 of the virtual memory module 300, and sends an updated state in the IC module 100 to the cache reflector 304 as cache information.

The cache reflector 304 checks whether the updated sate of the cache in the IC module 100 has been reflected to corresponding data stored in the data storage unit 301 of the virtual memory module 300. If the updated state of the cache has not been reflected to corresponding data stored in the data storage unit 301, the cache reflector 304 reflects the cache to the data storage unit 301.

As described above, according to this embodiment, when a virtual memory module that operates as a server is used, a cache of accesses is stored in an existing IC module, allowing quick access to cached data.

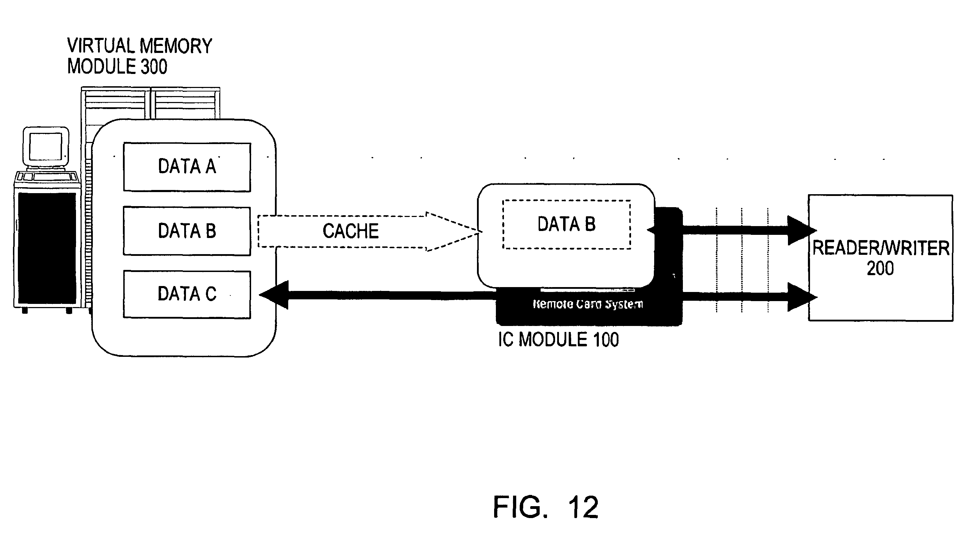

Fig. 12 schematically shows an image of usage of the IC module 100 as a place for temporarily storing data that is frequently used by a user, i.e., as a cache.

In the example shown in the figure, data A, data B, and data C, such as value information belonging to a user of the IC module 100, are managed on the virtual memory module 300 that operates as a server on the network. Of the data A, B, and C, if the user frequently uses the data B, the data B is written to the IC module 100 via the reader/writer 200.

After that, when a connection is established between the reader/writer 200 and the IC module 100 and the data B is used, the IC module 100 is directly read or written, so that quick transactions are achieved. Then, the reader/writer 200 writes an updated state of the cache to corresponding data in the virtual memory module 300 via the network, thereby maintaining cache consistency.

Obviously, the frequency of use by a user of specific data items may change as time passes. For example, if the data C has come to be used more frequently than the data B after a point in time, the data B may be swapped out from the IC module 100 while swapping in the data C to the IC module 100, based on a user's selection or automatically.

### B-2. Embodiment 2-2:

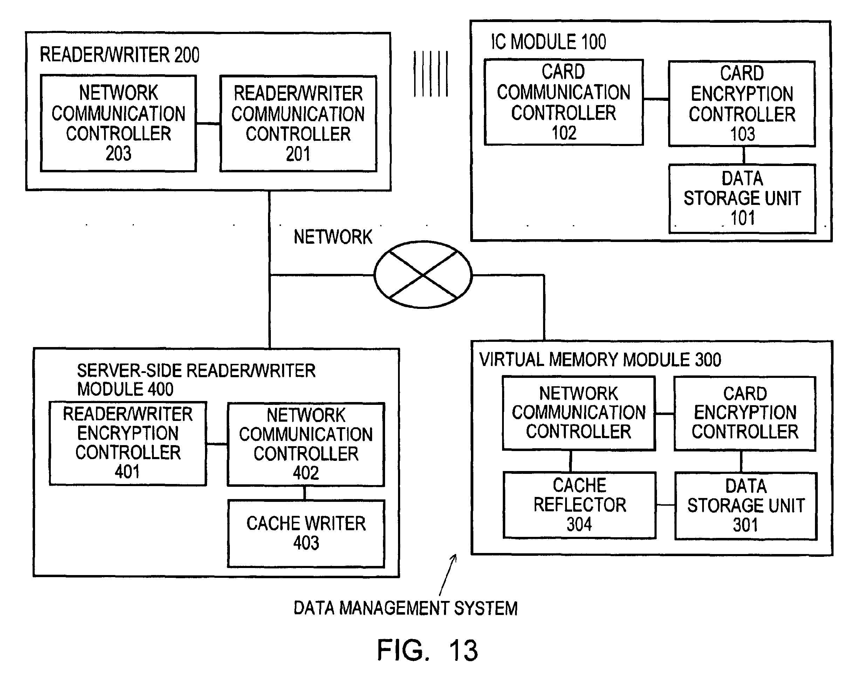

Fig. 13 schematically shows a modification of the data management system shown in Fig. 7. In the embodiment shown in Fig. 7, the reader/writer 200 that is capable of accessing an IC module supports networking, so that the reader/writer 200 is allowed to also access the virtual memory module 300. In contrast, in the embodiment shown in Fig. 13, a reader/writer 200 does not support networking, and it accesses data held in an IC module 100 under the control of a server 400 on a network. A virtual memory module 300 is accessed by the server 400 via the network.

As shown in Fig. 13, the data management system includes an IC module 100 that is carried by a user and that securely holds particular data (value information or the like), a reader/writer 200 for accessing a memory space of the IC module 100 to read or write data, a virtual memory module 300 that is connected via a network, and a server-side reader/writer module 400 that is capable of communicating with the reader/writer 200 and that accesses a memory space of the virtual memory module 300 to read or write data.

The IC module 100 includes a data storage unit 101, a card communication controller 102 for communicating with the reader/writer 200, and a card encryption controller 103 for controlling encryption of data exchanged with the reader/writer 200.

The IC module 100 is implemented, for example, in the form of a card, or is implemented in the form of a chip and is included in a small device such as a cellular phone or a PDA. The data storage unit 101 is a semiconductor chip, and the storage capacity thereof has an upper limit. In this embodiment, the data storage unit 101 is used as a cache for temporarily storing data (value information or the like) that is frequently accessed.

The reader/writer 200 includes a reader/writer communication controller 201 for communicating with the IC module 100, and a network communication controller 203 for transmitting data via a network.

The respective communication controllers 102 and 201 of the IC module 100 and the reader/writer 200 connect to each other, for example, in a contactless manner based on the principles of electromagnetic induction. The card encryption controller 103 communicates with the reader/writer 200 by changing its load between antennas (not shown) based on a response signal to a query signal from the reader/writer 200 to amplitude-modulate a signal that appears in a receiver circuit of the reader/writer 200. Obviously, connection between the IC module 100 and the reader/writer 200 is not limited to a contactless connection, and a connection may be formed by inserting the IC module 100 in a card slot of the reader/writer 200.

The virtual memory module 300 includes a data storage unit 301 for providing a virtual memory space for the IC module, a network communication controller 302 for communicating with the reader/writer 200, a card encryption controller 303 for controlling encryption of data exchanged with the reader/writer 200, and a cache reflector for reflecting an updated state of cache data in the data storage unit 101 to corresponding data in the data storage unit 301.

The virtual memory module 300 is used to virtually expand a memory area in the data storage unit 101 of the IC module 100, which is limited in terms of hardware. The virtual memory module 300 itself is not carried for use by a user, so that it does not have hardware restrictions such as a card shape. Thus, the data storage unit 301 of the virtual memory module 300 is implemented using a large-capacity storage device such as a hard disk, and it operates as a virtual memory space of the data storage unit 101 of the IC module 100. Thus, the maximum memory capacity of the IC module 100 becomes essentially unlimited. The virtual memory module 300 is implemented, for example, by a server machine provided on a broadband network.

The server-side reader/writer module 400 includes a reader/writer encryption controller 401 for communicating with the reader/writer, a network communication controller 402 for carrying out data communications via a network such as a TCP/IP network, and a cache writer 403 for writing data to be cached to the data storage unit 101 in the IC module 100. The reader/writer 200 is implemented, for example, by a server machine that is provided on a broadband network and that is capable of accessing the virtual memory module 300.

The respective network communication controllers 302 and 402 of the virtual memory module 300 and the server-side reader/writer module 400 form a network connection based on predetermined communication protocols, for example, TCP/IP.

The data storage unit 101 of the IC module 100 stores an ID for identifying a data space of the module, and a link to data in the data storage unit of the virtual memory module 300 is formed based on the ID. Furthermore, in the data storage unit 101, a specific file structure is formed, and an upper limit value thereof is set. The upper limit value of the data storage unit 101 is linked to a file structure in the data storage unit 301 in the virtual memory module 300.

When obtaining data held in the IC module 100, if an entity of data stored in the data storage unit 101 of the IC module 100 is cached in the IC module 100, the server-side reader/writer module 400 accesses the IC module 100 via the reader/writer 200 to obtain the entity of data from the data storage unit 101 of the IC module 100. On the other hand, if an entity of data stored in the data storage unit 101 of the IC module 100 is not cached in the IC module 100, the server-side reader/writer module 400 accesses the virtual memory module 300 via the network to obtain the entity of data from the data storage unit 301 of the virtual memory module 300.

Furthermore, when the data storage unit 101 of the IC module 100 is used as a cache, the cache writer 403 checks a memory space in the IC module 100, and obtains an ID thereof if a capacity that allows caching further data remains. Then, the cache writer 403 obtains data corresponding to the ID from the virtual memory module among data to be cached, and stores the data in the data storage unit 101 in the IC module 100.

Furthermore, a cache selecting user interface (not shown) for allowing a user to specify data to be cached may be provided. This allows the user to select specific value information that is frequently used, such as electronic money or electronic ticket, and to hold the value information on the IC module 100. In that case, by user-driven caching of frequently used data, the data can be used without connecting to the virtual memory module 300, so that quick transactions are achieved. No particular limitation exists as to where the cache selecting user interface is provided, and the cache selecting user interface may be provided, for example, in the IC module 100, the reader/writer 200, the virtual memory module 300, or the server-side reader/writer module 400.

When using data cached in the manner described above, the user places the IC module 100 over the reader/writer 200 to establish a contactless connection. At this time, the server-side reader/writer module 400 checks whether data is present in the IC module 100 via the reader/writer 200. If the presence of the data in the data storage unit 101 is confirmed, the server-side reader/writer module 400 executes transactions to update the data in the data storage unit 101.

Furthermore, upon confirming that the data in the IC module 100 has been updated, the server-side reader/writer module 400 starts accessing the virtual memory module 300, and reflects an updated sate in the IC module 100 to corresponding data in the virtual memory module 300, thereby maintaining consistency of cache data.

### B-3. Embodiment 2-3:

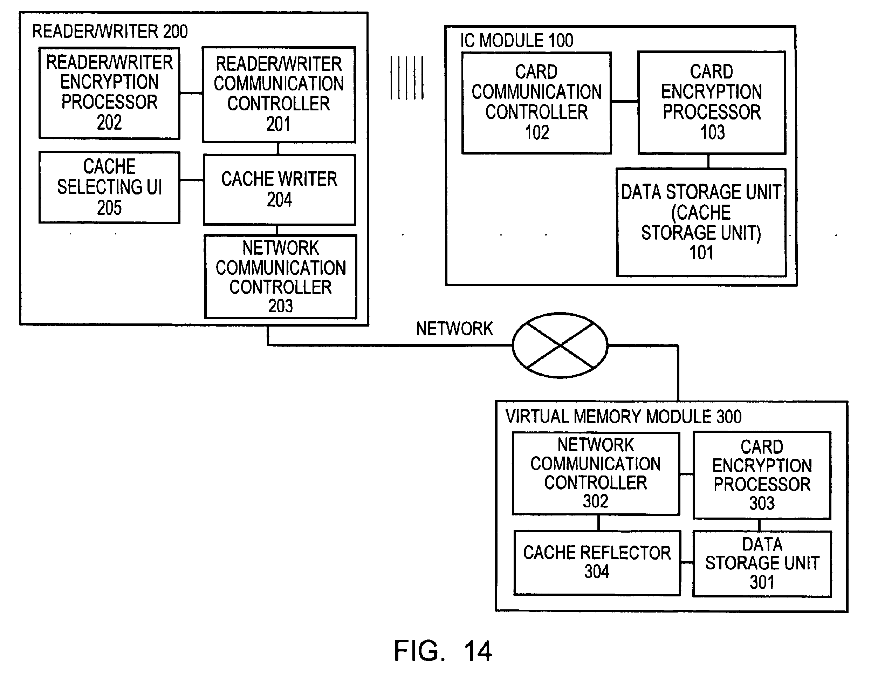

Fig. 14 schematically shows another modification of the data management system shown in Fig. 7.

As described earlier, in embodiments of the present invention, when a virtual memory module that operates as a server is used, a cache of accesses is stored in an existing IC module, allowing quick access to cached data.

In the embodiment shown in Fig. 14, a cache selecting user interface 205 for allowing a user to specify data to be cached is provided in a reader/writer 200. Thus, the user is allowed to select specific value information that is frequently used, such as electronic money or electronic ticket, and to hold the value information in the IC module 100. In this case, by user-driven caching of frequently used data, the data can be used without connecting to the virtual memory module 300, so that quick transactions are achieved.

As shown in Fig. 14, the data management system includes an IC module 100 that is carried by a user and that securely holds particular data (value information or the like), a reader/writer 200 for accessing a memory space in the IC module 100 to read or write data, and a virtual memory module that is connected to the reader/writer 200 via a network.

The IC module 100 includes a data storage unit 101, a card communication controller 102 for communicating with the reader/writer 200, and a card encryption controller 103 for controlling encryption of data exchanged with the reader/writer 200.

The IC module 100 is implemented, for example, in the form of a card, or is implemented in the form of a chip and is included in a small device such as a cellular phone or a PDA. The data storage unit 101 is a semiconductor memory, and the storage capacity thereof has an upper limit. In this embodiment, the data storage unit 101 is used as a cache for temporarily storing data (value information or the like) that is frequently accessed.

The reader/writer 200 includes a reader/writer communication controller 201 for communicating with the IC module 100, a reader/writer encryption controller 202 for controlling encryption of data exchanged with the IC module, a network communication controller 203 for carrying out data communications via a network such as a TCP/IP network, a cache writer 204 for writing data to be cached to the data storage unit 101 in the IC module 100, and a cache selecting user interface 205 for allowing a user to specify data to be cached. The reader/writer 200 is implemented, for example, by a server machine that is provided on a broadband network and that is capable of accessing the IC module 100.

The respective communication controllers 102 and 202 of the IC module 100 and the reader/writer 200 connect to each other, for example, in a contactless manner based on the principles of electromagnetic induction. The card communication controller 103 communicates with the reader/writer 200 by changing its load between antennas (not shown) based on a response signal to a query signal form the reader/writer 200 to amplitude-modulate a signal that appears in a receiver circuit of the reader/writer 200.

Obviously, connection between the IC module 100 and the reader/writer 200 is not limited to a contactless connection, and a connection may be formed by inserting the IC module 100 in a card slot of the reader/writer 200.

The virtual memory module 300 includes a data storage unit 301 for providing a virtual memory space for the IC module, a network communication controller 302 for communicating with the reader/writer 200, a card encryption controller 303 for controlling encryption of data exchanged with the reader/writer 200, and a cache reflector 304 for reflecting an updated state of cache data in the data storage unit 101 of the IC module 100 to corresponding data in the data storage unit 301.

The respective network communication controllers 302 and 201 of the virtual memory module 300 and the reader/writer 200 form a network connection based on predetermined communication protocols, for example, TCP/IP.

The virtual memory module 300 is used to virtually expand a memory area for holding data (value information such as electronic money or electronic ticket) in the IC module 100, which is limited in terms of hardware. The virtual memory module 300 itself is not carried for use by a user, so that it does not have hardware restrictions such as a card shape. Thus, the data storage unit 301 of the virtual memory module 300 is implemented using a large-capacity storage device such as a hard disk, and it operates as a virtual memory space of the data storage unit 101 of the IC module 100. Thus, the maximum memory capacity of the IC module 100 becomes essentially unlimited. The virtual memory module 300 is implemented, for example, by a server machine that is provided on a broadband network.

The data storage unit 101 of the IC module 100 stores an ID for identifying a data space of the module, and a link to data in the data storage unit of the virtual memory module 300 is formed based on the ID. Furthermore, in the data storage unit 101, a specific file structure is formed, and an upper limit value thereof is set. The upper limit value of the data storage unit 101 is linked to a file structure in the data storage unit 301 in the virtual memory module 300.

When communicating with the IC module 100, if an entity of data stored in the data storage unit 101 of the IC module 100 is not present in the IC module 100, the reader/writer 200 accesses the virtual memory module 300 via the network to obtain the entity of data from the data storage unit 301 of the virtual memory module 300.

One virtual memory module may be provided for each IC module. Alternatively, a single virtual memory module may provide virtual memory spaces simultaneously for a plurality of IC modules. Obviously, a single IC module may have virtual memory spaces in a plurality of virtual memory modules.

Furthermore, when the data storage unit 101 of the IC module 100 is used as a cache, first, a user is prompted to select data to be cached via the cache selecting user interface 205 on the reader/writer 200. Then, the cache writer 204 of the reader/writer 200 checks a memory space in the IC module 100, and obtains an ID thereof if a capacity that allows caching the data selected by the user remains. The cache writer 204 obtains data corresponding to the ID from the virtual memory module among data to be cached, and stores the data in the data storage unit 101 of the IC module 100.

This allows the user to select specific value information that is frequently used, such as electronic money or electronic ticket, and to hold the value information on the IC module 100. In this case, by user-driven caching of frequently used data, the data can be used without connecting to the virtual memory module 300, so that quick transactions are achieved.

When using cached data, the user places the IC module 100 over the reader/writer 200 to establish a contactless connection. Then, the reader/writer 200 checks whether data is present in the IC module 100. If the presence of data in the data storage unit 101 of the IC module 100 is confirmed, the reader/writer 200 executes transactions to update the data in the data storage unit 101.

Furthermore, upon confirming that the data in the IC module 100 has been updated, the reader/writer 200 starts accessing the virtual memory module 300, and reflects an updated state in the IC module 100 to corresponding data in the virtual memory module 300, thereby maintaining consistency of cache data.

### B-4. Embodiment 2-4:

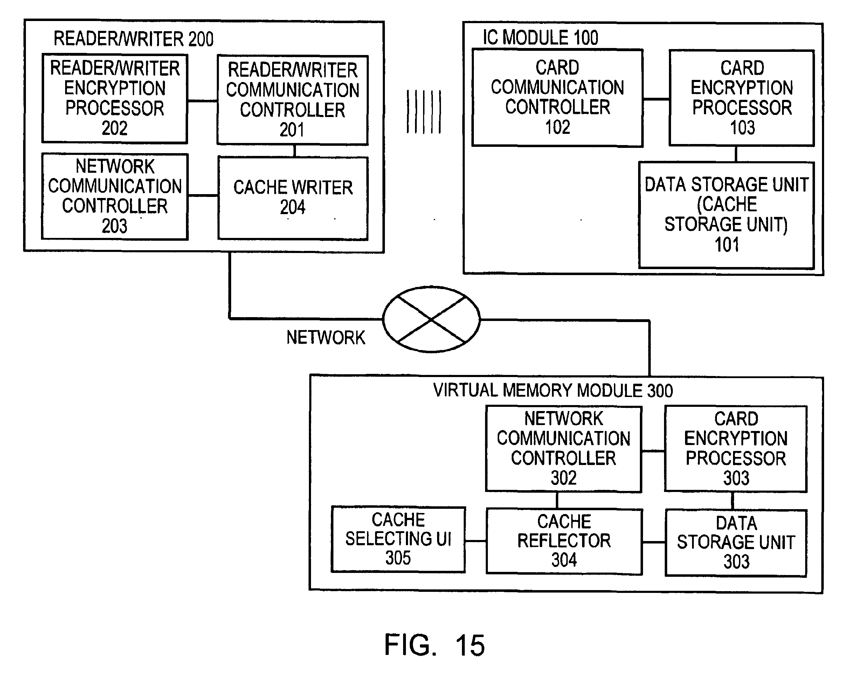

Fig. 15 schematically shows another modification of the data management system shown in Fig. 14. In the embodiment shown in Fig. 14, a cache selecting user interface is implemented on the reader/writer 200. In contrast, in the embodiment shown in Fig. 15, a cache selecting user interface is implemented on the virtual memory module 300.

As shown in Fig. 15, the data management system includes an IC module 100 that is carried by a user and that securely holds particular data (value information or the like), a reader/writer 200 for accessing a memory space in the IC module 100 to read or write data, and a virtual memory module 300 that is connected to the reader/writer 200 via a network.

The IC module 100 includes a data storage unit 101, a card communication controller 102 for communicating with the reader/writer 200, and a card encryption controller 103 for controlling encryption of data exchanged with the reader/writer 200.

The IC module 100 is implemented, for example, in the form of a card, or is implemented in the form of a chip and is included in a small device such as a cellular phone or a PDA. The data storage unit 101 is a semiconductor memory, and the storage capacity thereof has an upper limit. In this embodiment, the data storage unit 101 is used as a cache for temporarily storing data (value information or the like) that is frequently accessed.

The reader/writer 200 includes a reader/writer communication controller 201 for communicating with the IC module 100, a reader/writer encryption controller 202 for controlling encryption of data exchanged with the IC module, a network communication controller 203 for carrying out data communications via a network such as a TCP/IP network, and a cache writer 204 for writing data to be cached to the data storage unit 101 in the IC module 100. The reader/writer 200 is implemented, for example, by a server machine that is provided on a broadband network and that is capable of accessing the IC module 100.

The respective communication controllers 102 and 201 of the IC module 100 and the reader/writer 200 form a connection, for example, in a contactless manner based on the principles of electromagnetic induction. The card encryption controller 103 communicates with the reader/writer 200 by changing its load between antennas (not shown) based on a response signal to a query signal from the reader/writer 200 to amplitude-modulate a signal that appears in a receiver circuit of the reader/writer 200.

Obviously, connection between the IC module 100 and the reader/writer 200 is not limited to a contactless connection, and a connection may be formed by inserting the IC module 100 in a card slot of the reader/writer 200.

The virtual memory module 300 includes a data storage unit 301 for providing a virtual memory space for the IC module, a network communication controller 302 for communicating with the reader/writer 200, a card encryption controller 303 for controlling encryption of data exchanged with the reader/writer 200, a cache reflector 304 for reflecting an updated state of cache data in the data storage unit 101 of the IC module 100 to corresponding data in the data storage unit 301, and a cache selecting user interface 305 for allowing a user to specify data to be cached.

The respective network communication controllers 302 and 201 of the virtual memory module 300 and the reader/writer 200 form a network connection based on predetermined communication protocols, for example, TCP/IP.

The virtual memory module 300 is used to virtually expand a memory area for holding data (value information such as electronic money or electronic ticket) in the IC module 100, which is limited in terms of hardware. The virtual memory module 300 itself is not carried for use by a user, so that it does not have hardware restrictions such as a card shape. Thus, the data storage unit 301 of the virtual memory module 300 is implemented using a large-capacity storage device such as a hard disk, and it operates as a virtual memory space of the data storage unit 101 of the IC module 100. Thus, the maximum memory capacity of the IC module 100 becomes essentially unlimited. The virtual memory module 300 is implemented, for example, by a server machine provided on a broadband network.

The data storage unit 101 of the IC module 100 stores an ID for identifying a data space of the module, and a link to data in the data storage unit of the virtual memory module 300 is formed based on the ID. Furthermore, in the data storage unit 101, a specific file structure is formed, and an upper limit value thereof is set. The upper limit value of the data storage unit 101 is linked to a file structure in the data storage unit 301 in the virtual memory module 300.

When communicating with the IC module 100, if an entity of data stored in the data storage unit 101 of the IC module 100 is not present in the IC module 100, the reader/writer 200 accesses the virtual memory module 300 via the network to obtain the entity of data from the data storage unit 301 of the virtual memory module 300.

One virtual memory module may be provided for each IC module. Alternatively, a single virtual memory module may provide virtual memory spaces simultaneously for a plurality of IC modules. Obviously, a single IC module may have virtual memory spaces in a plurality of virtual memory modules.

Furthermore, when the data storage unit 101 in the IC module 100 is used as a cache, first, a user is prompted to select data to be cached via the cache selecting user interface 205 on the virtual memory module 300. Then, the cache writer 204 of the reader/writer 200 checks a memory space in the IC module 100, and obtains an ID if a capacity that allows caching the data selected by the user remains. Then, the cache writer 204 obtains data corresponding to the ID from the virtual memory module among data to be cached, and stores the data in the data storage unit 101 of the IC module 100.

This allows the user to select specific value information that is frequently used, such as electronic money or electronic ticket, and holds the value information on the IC module 100. In this case, by user-driven caching of frequently used data, the data can be used without connecting to the virtual memory module 300, so that quick transactions are achieved.

When using cached data, the user places the IC module 100 over the reader/writer 200 to establish a contactless connection. Then, the reader/writer 200 checks whether data is present in the IC module 100. Upon confirming the presence of the data in the data storage unit 101, the reader/writer 200 executes transactions to update the data in the data storage unit 101.

Furthermore, upon confirming that the data in the IC module 100 has been updated, the reader/writer 200 starts accessing the virtual memory module 300, and reflects an updated state in the IC module 100 to corresponding data in the virtual memory module 300, thereby maintaining consistency of cache data.

### C. Third Embodiment.

According to this embodiment, only an ID is stored in a secure manner in two terminals so that data stored in a server in association with the ID can be exchanged quickly and securely simply by placing the terminals in proximity to each other.

As an embodiment of the present invention, a terminal includes a wireless communication controller having a mode for operating as an IC module (hereinafter referred to as a "card mode") and a mode for operating as a reader/writer (hereinafter referred to as a "reader/writer mode").

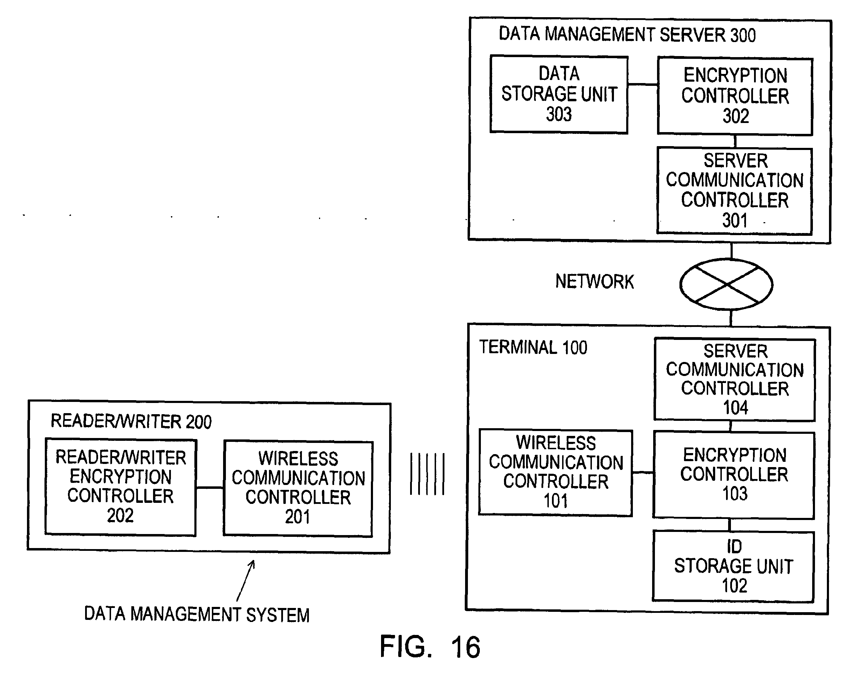

Fig. 16 schematically shows the configuration of a data management system according to a third embodiment of the present invention. As shown in the figure, the data management system includes a terminal 100, a reader/writer 200, and a data management server 300. It is assumed that the terminal 100 operates in the card mode.

The terminal 100 includes a wireless communication controller 101 that is capable of functioning both as an IC module and as a reader/writer, an ID storage unit 102 for storing an ID for associating data used on the terminal 100, an encryption controller for controlling encrypted data communications, and a server communication controller 104 for controlling communications with the virtual memory module 300 via a network. It is assumed that the wireless communication unit 101 operates in the card mode.

The reader/writer 200 includes a wireless communication controller 201 for carrying out wireless communications with the terminal 100 operating in the card mode, and a reader/writer encryption controller 202 for controlling encrypted data communications with the terminal 100 operating in the card mode.

The terminal 100 operating in the card mode and the reader/writer 200 connect to each other, for example, in a contactless manner based on the principles of electromagnetic induction. The wireless communication controller 101 of the terminal 100 communicates with the reader/writer 200 by changing its load between antennas (not shown) based on a response signal to a query signal from the reader/writer 200 to amplitude-modulate a signal that appears in a receiver circuit of the reader/writer 200.

The data management server 300 includes a server communication controller 301 for controlling communications with the terminal 100 via a network, an encryption controller 302 for controlling encrypted data communications with the terminal 100 operating in the card mode, and a data storage unit 303 for providing a virtual memory space for the IC module.

The respective server communication controllers 301 and 104 of the data management server 300 and the terminal 100 establish a network connection based on predetermined communication protocols, for example, TCP/IP.

The data management server 300 is a server machine that is provided on a network in order to virtually expand a memory area for holding data in the terminal 100 functioning as an IC module, which is limited in terms of hardware. The data management server 300 is not carried for use by a user, so that it does not have hardware restrictions such as a card shape. Thus, the data storage unit 301 of the data management server 300 is implemented using a large-capacity storage device such as a hard disk, and it operates as a virtual memory space of the terminal 100. Thus, the maximum memory capacity of the terminal 100 becomes essentially unlimited.

Each data item (value information such as electronic money or electronic ticket) used on the terminal 100 operating as an IC module is associated with a unique ID. That is, the ID is linked with an entity of data stored in the data storage unit 303 of the data management server 300.

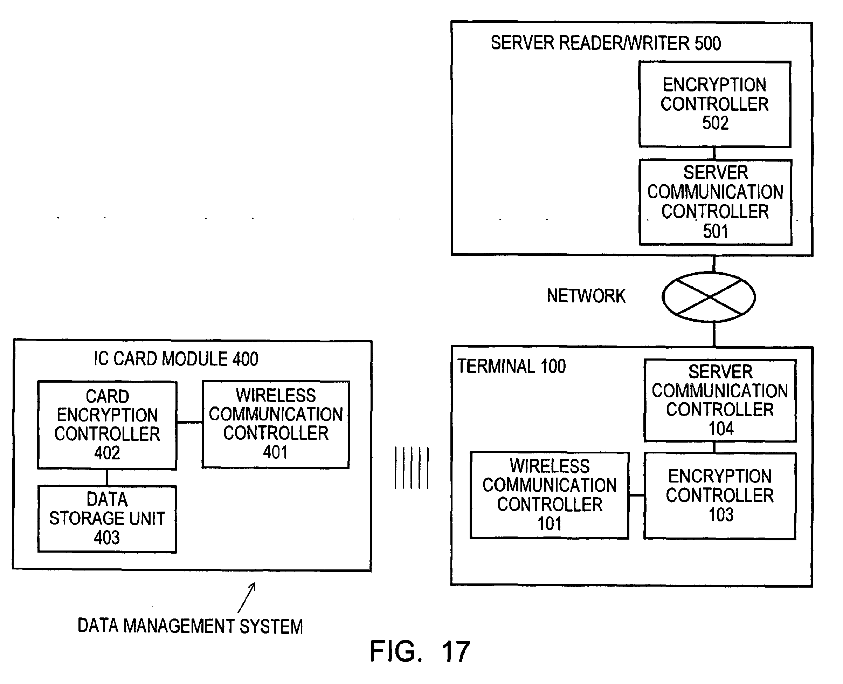

Fig. 17 schematically shows the configuration of a data management system in a case where the terminal 100 operates in the reader/writer mode. As shown in the figure, the data management system includes a terminal 100, an IC card module 400, and a server reader/writer 500.

The terminal 100 includes a wireless communication controller 101 that is capable of functioning both as an IC module and as a reader/writer, an ID storage unit 102 for storing an ID for associating data used on the terminal 100, an encryption controller 103 for controlling encrypted data communications, and' a server communication controller 104 for controlling communications with the server 300 via a network. It is assumed that the wireless communication controller 101 operates in the reader/writer mode.

The IC card module 400 includes a wireless communication controller 401 for communicating with the terminal 100 operating as a reader/writer, a card encryption controller 402 for controlling encryption of data exchanged with the terminal 100, and a data storage unit 403. Each data item (value information such as electronic money or electronic ticket) used on the IC card module 400 is associated with a unique ID.

The terminal 100 operating in the reader/writer mode and the IC card module 400 connect to each other, for example, in a contactless manner based on the principles of electromagnetic induction. The wireless communication controller 401 of the IC card module 400 communicates with the terminal 100 by changing its load between antennas (not shown) based on a response signal to a query signal from the terminal 100 to amplitude-modulate a signal that appears in a receiver circuit of the terminal 100.

The server reader/writer 500 includes an encryption controller 501 for carrying out encrypted communications with the reader/writer, and a server communication controller 502 for carrying out data communications via a network such as a TCP/IP network.

Now, a procedure of operation for allowing data exchange between two terminals 100A and 100B that are capable of operating in the card mode and the reader/writer mode. In this embodiment, data held by a user of a first terminal 100A is held by a user of a second terminal 100B, allowing exchange of data.

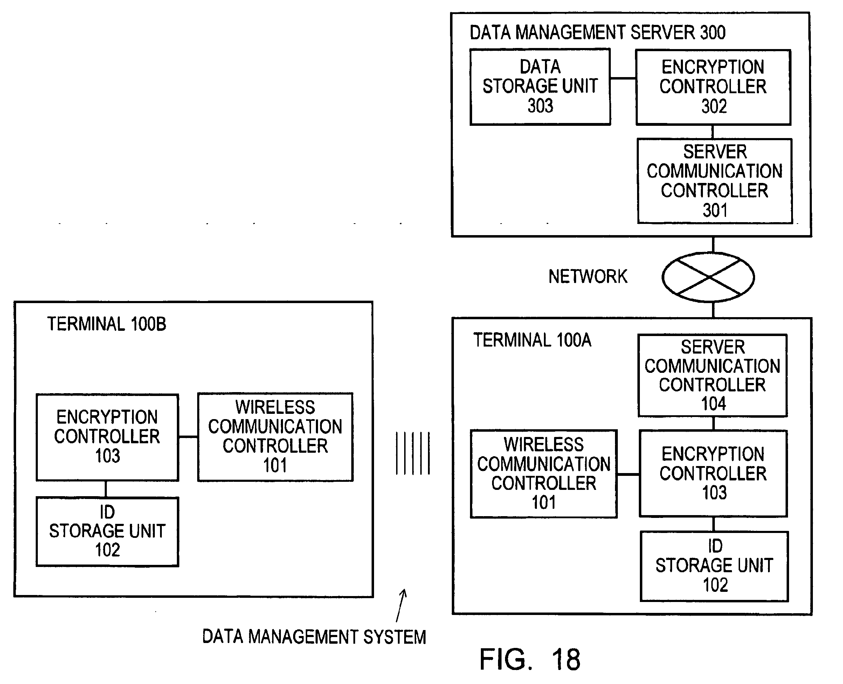

Fig. 18 schematically shows the configuration of a data management system including the terminal 100A that operates in the reader/writer mode and the terminal 100B that operates in the card mode.

The terminal 100A operating in the reader/writer mode is capable of transferring to the data management server 300 data transferred from the terminal 100B operating in the card mode by encrypted communications.

When the terminal 100B is placed in sufficient proximity to the terminal 100A, the wireless communication controllers 101 of the respective terminals are activated, allowing a wireless connection based on electromagnetic induction. Then, the terminal 100A reads an ID for associating desired data from the terminal 100B, and sends the ID to the data management server 300 via the server communication controller 104.

Also, the terminal 100A sends an ID for associating its own data to be exchanged to the data management server 300 via the server communication controller 104.

The data management server 300 recognizes transfer of data from the terminal 100A to the terminal 100B, and finds a source and a destination of data transfer based on the IDs of the respective terminals.

Then, the data management server 300 carries out data transfer in a database implemented on the data storage unit 303, with data held by a user of the terminal 100A as data held by a user of the terminal 100B.

The data management server 300 notifies the terminal 100A at the source of data transfer of completion of data transfer.

Also, the data management server 300 notifies the terminal 100B operating in the card mode of completion of data transfer via the terminal 100A operating in the reader/writer mode.

In the data transfer sequence described above, the same processing is also executed when data is transferred from the terminal 100B to the terminal 100A. In that case, however, the terminal 100A operates in the card mode and the terminal 100B operates in the reader/writer mode.

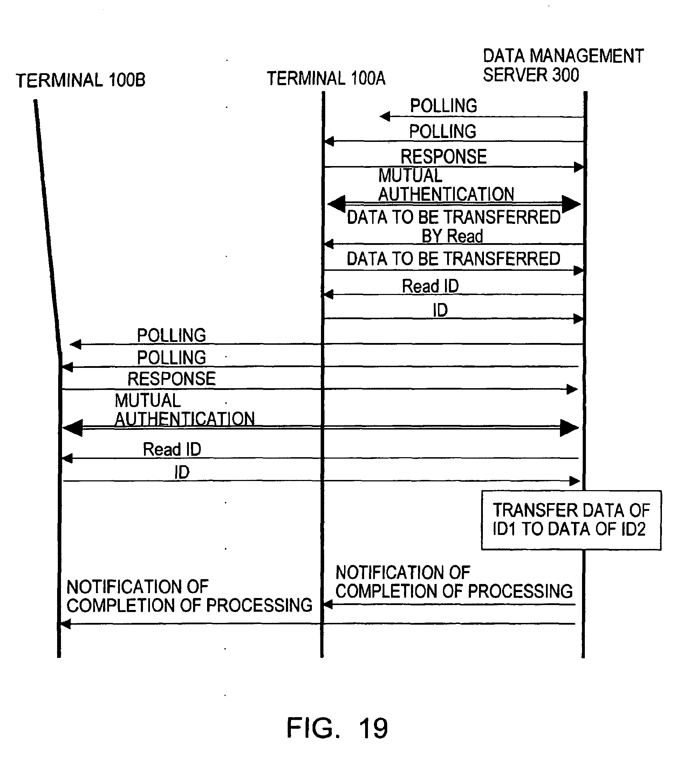

Fig. 19 shows a sequence of operation for transferring data from the terminal 100A operating in the reader/writer mode to the terminal 100B operating in the card mode in the data management system according to this embodiment.

The data management server 300 polls the terminal 100A operating as the reader/writer via a network.

In response to the polling, the terminal 100A generates a response in the encryption controller 103, and returns the response to the data management server 300. Procedures of mutual authentication and response are executed at least once to establish mutual authentication and to share an encryption key, whereby secure data communications using encryption are allowed.

The data management server 300 recognizes that data is to be transferred from the terminal 100A, and issues to the terminal 100A a read request (Read) for data to be transferred, thereby obtaining data to be transferred. Then, the data management server 300 issues a read request (ReadID) for ID1 for associating the data to be transferred, thereby obtaining ID1.

Furthermore, the data management server 300 recognizes that the data to be transferred is to be transferred to the terminal 100B, and polls via the terminal 100A the terminal 100B operating in the card mode.

When the terminal 100B is placed in sufficient proximity to the terminal 100A, the wireless communication controllers 101 of the respective terminals are activated, allowing a connection based on electromagnetic induction. Then, the terminal 100A generates a response in the encryption controller 103, and returns the response to the data management server 300 via the terminal 100A.

Then, the terminal 100B and the data management server 300 execute procedures of mutual authentication and response at least once via the terminal 100A to establish mutual authentication and to share an encryption key, whereby secure data communications using encryption are allowed.

Then, the data management server 300 recognizes that data is to be transferred to the terminal 100B, and issues to the terminal 100B a read request (ReadID) for ID2 for associating data to be transferred, thereby obtaining ID2.

Then, the data management server 300 carries out data transfer in a database implemented on the data storage unit 303, with data held by a user of the terminal 100A as data held by a user of the terminal 100B. That is, data associated with ID1 is transferred as data of ID2.

Then, the data management server 300 notifies the terminal 100A at the source of data transfer of completion of data transfer.

Also, the data management server 300 notifies the terminal 100B operating in the card mode of completion of data transfer via the terminal 100A operating in the reader/writer mode.

Furthermore, the data management server 300 may collect charge for secure transfer service between terminals by introducing a settlement system. That is, the data management server 300 may collect charge when data is transferred between two terminals using a settlement system connected to the data management server 300.

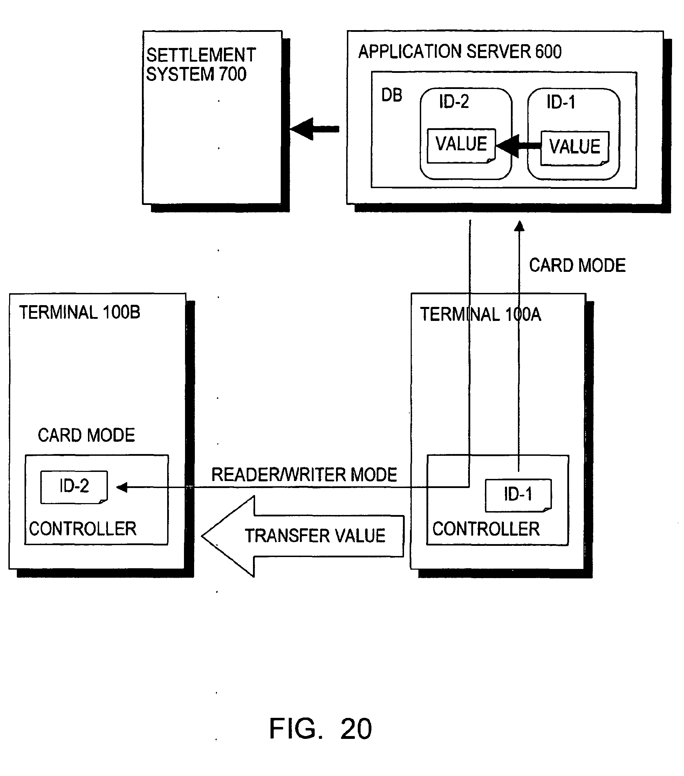

Fig. 20 illustrates a system for collecting charge for data transfer when data is transferred from the terminal 100A to the terminal 100B.

While the terminal 100A is operating in the card mode, an external application server 600 writes and reads data associated with ID1, such as value information, to and from the terminal 100A. Furthermore, the application server 600 manages data associated with ID1 on a database.

Furthermore, the application server 600 is allowed to access the terminal 100B operating in the card mode via the terminal 100A operating in the reader/writer mode.

Furthermore, when data associated with ID1 of the terminal 100A is transferred to the terminal 100B, the application server 600 reads ID2 for associating the data to be transferred, from the terminal 100B via the terminal 100A operating as the reader/writer. Then, the application server 600 moves data associated with ID1 on the database as data of ID2.

The application server 600 is connected to a settlement system 700 for collecting charge for data transfer. The settlement system 700 monitors the database, and bills a price for using the data transfer service to one or both of the terminal 100A and the terminal 100B at the source and destination of data transfer when data associated with ID1 is transferred as data of ID2.

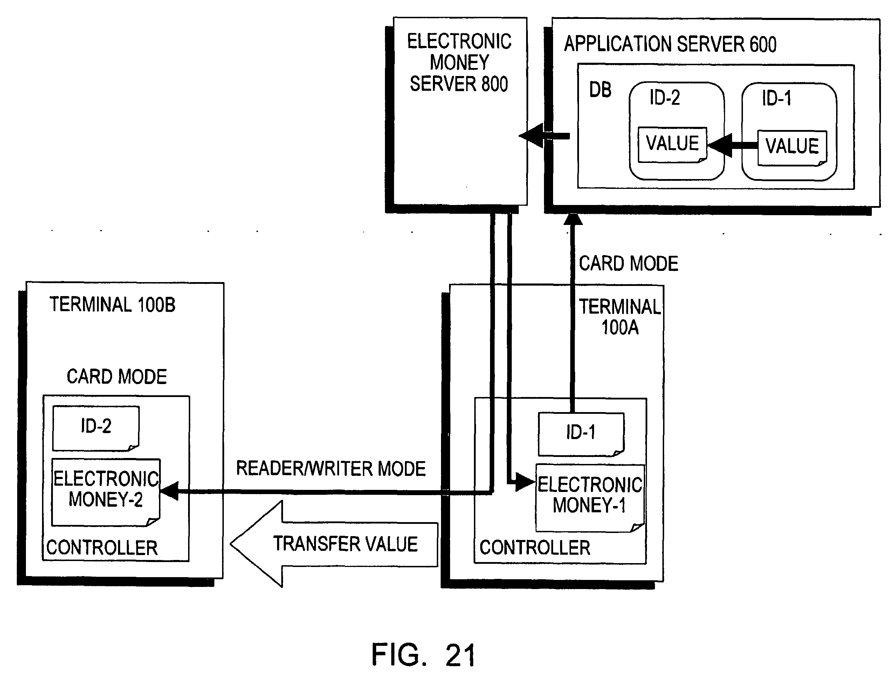

Furthermore, it is also possible to settle transactions in terms of electronic money stored in the terminals when data is transferred. Fig. 21 schematically shows a system for settling transactions using electronic money when data is transferred from the terminal 100A to the terminal 100B. In the example shown in the figure, it is assumed that data held by a user of the terminal 100A is assigned at a price to a user of the terminal 100B.

An electronic money server 800 unitarily manages electronic money data owned by the terminals 100A and 100B.

When data associated with ID1 of the terminal 100A is transferred to the terminal 100B, the application server 600 reads ID2 for associating the data to be transferred, from the terminal 100B via the terminal 100A operating as a reader/writer. Then, the application server 600 data associated with ID1 is transferred as data of ID2 on the database, whereby data transfer is completed.

Then, the terminal 100B is caused to enter the card mode and the terminal 100A is caused to enter the reader/writer mode, and electronic money data stored in the terminal 100B is transmitted to the electronic money server 800 via the terminal 100A and the application server 600. Then, the electronic money server 800 subtracts a sum billed for the data transfer from the electronic money data stored in the terminal 100B.

Furthermore, the electronic money server 800 adds to the electronic money data stored in the terminal 100A that has provided data, thereby settling the transaction in terms of electronic money.

The functions of the electronic money server 800 may be implemented on the data management server 300 described above.

Furthermore, when it is allowed to exchange electronic money securely between the terminals 100A and 100B, direct transactions between terminals without an intermediary server described above is possible.

When electronic money is managed by a server, transactions of electronic money data can be executed in the server by notifying the server of an ID associated with electronic money.

### Supplement

Although the present invention has been described in detail in the context of specific embodiments, obviously, modifications of and alternatives to the embodiments can be conceived by those skilled in the art without departing from the spirit of the present invention. That is, the present invention has been disclosed by way of examples, and the present invention should not be construed as limited to the examples. The gist of the present invention should be determined in consideration of the Claims.

### Industrial Applicability

According to the present invention, a memory area of a data storage unit that is limited in terms of hardware is virtually expanded to provide an essentially unlimited maximum memory capacity of a data storage unit of an IC module.

Furthermore, according to the present invention, by allowing upgrading of programs for executing virtual transactions, fixed programs for IC modules can be virtually extended.

Furthermore, according to the present invention, a favorable data management system, reader/writer apparatus, and virtual memory device that allow a memory area associated with an IC module to be expanded using a virtual memory module connected via a network are provided.

Furthermore, according to the present invention, a favorable data management system, reader/writer apparatus, and virtual memory device that improve the speed of data access in a case where a memory area associated with an IC module is expanded using a virtual memory module connected via a network are provided.

Furthermore, according to the present invention, it is possible to achieve high-speed transactions by providing a cache controller in a reader/writer or a virtual memory module and by caching data for transactions in a data storage unit of an IC module. It is also possible to exchange data to be cached, allowing a user to select data to be cached.

Furthermore, according to the present invention, a favorable data management method that allows secure exchange of value information stored on a server between two terminals is provided.

Furthermore, according to the present invention, a favorable data management system that allows secure exchange of a large volume of data in a short time between two terminals is provided.

Furthermore, according to the present invention, a favorable data management method that allows secure exchange without carrying a secure memory having a large capacity is provided.

## Claims

1. A data management system for expanding a memory area associated with an IC module, the data management system comprising:
a virtual memory module comprising a data storage unit for storing data that is used on the IC module and a card encryption function controller for controlling encryption of communication data; and
a reader/writer comprising a reader/writer communication controller for accessing the memory area of the IC module, a reader/writer encryption function controller for controlling encryption of communication data exchanged with the IC module, and a network communication controller for connecting to the virtual memory module via a network;
wherein the reader/writer accesses the virtual memory module to obtain data that is to be used on the IC module when the data is not present on the IC module.

2. A data management system according to Claim 1,
wherein an ID that is linked to data on the virtual memory module is stored in the IC module.

3. A data management system according to Claim 1,
wherein an upper limit value is set for a file structure in the memory area of the IC module, and it is linked to a file structure in the virtual memory module.

4. A data management system according to Claim 1,
wherein a server-side reader/writer module that is connected via the network is provided,
wherein a reader/writer encryption processor for controlling encryption of communication data exchanged with the IC module is provided in the server-side reader/writer module,
and wherein the reader/writer receives a response received from the IC module, and transfers encrypted response data as it is to the server-side reader/writer module via the network, and the response data is processed in the server-side reader/writer module.

5. A data management system according to Claim 1,
wherein a version management module is provided on the network, the version management module preparing an upgrading program or upgrading programs for the reader/writer encryption processor of the reader/writer and/or the card encryption processor of the virtual memory module and transferring the upgrading program or upgrading programs to the reader/writer and/or the virtual memory module.

6. A virtual memory device for expanding a memory area associated with an IC module, the virtual memory module comprising:
a data storage unit for storing data that is used on the IC module; and
a card encryption function controller for controlling encryption of communication data.

7. A virtual memory device according to Claim 6,
wherein an ID that is linked to data on the virtual memory module is stored in the IC module.

8. A virtual memory device according to Claim 6,
wherein an upper limit value is set for a file structure in the memory area of the IC module, and it is linked to a file structure in the virtual memory module.

9. A method of controlling a virtual memory for expanding a memory area associated with an IC module, the method comprising:
a data storing step of storing data that is used on the IC module; and
a card encryption function controlling step of controlling encryption of communication data.

10. A method of controlling a virtual memory according to Claim 9,
wherein an ID that is linked to data on the virtual memory module is stored in the IC module.

11. A method of controlling a virtual memory according to Claim 9,
wherein an upper limit value is set for a file structure in the memory area of the IC module, and it is linked to a file structure in the virtual memory module.

12. An IC module accessing device for accessing an IC module having a memory area expanded by a virtual memory module on a network,
the IC module accessing device comprising a reader/writer communication controller for accessing the memory area of the IC module, a reader/writer encryption function controller for controlling encryption of communication data exchanged with the IC module, and a network communication controller for connecting to the virtual memory module via the network,
wherein the IC module accessing device accesses the virtual memory module to obtain data that is to be used on the IC module when the data is not present on the IC module.

13. An IC module accessing device according to Claim 12,
wherein an ID that is linked to data on the virtual memory module is stored in the IC module.

14. An IC module accessing device according to Claim 12,
wherein an upper limit value is set for a file structure in the memory area of the IC module, and it is linked to a file structure in the virtual memory module.

15. A method of controlling access to an IC module having a memory area expanded by a virtual memory module on a network, the method comprising:
a reader/writer communication controlling step of accessing the memory area of the IC module;
a reader/writer encryption function controlling step of controlling encryption of communication data exchanged with the IC module; and
a network communication controlling step of connecting to the virtual memory module via the network;
wherein the virtual memory module is accessed to obtain data that is to be used on the IC module when the data is not present on the IC module.

16. A method of controlling access to an IC module according to Claim 15,
wherein an ID that is linked to data on the virtual memory module is stored in the IC module.

17. A method of controlling access to an IC module according to Claim 15,
wherein an upper limit value is set for a file structure of the memory area of the IC module, and it is linked to a file structure in the virtual memory module.

18. A data management system for expanding a memory area associated with an IC module, the data management system comprising:
a virtual memory module comprising a data storage unit for storing data that is used by a user of the IC module and a card encryption controller for controlling encryption of communication data;
a reader/writer communication controller for accessing the memory area of the IC module;
a reader/writer encryption controller for controlling encryption of communication data exchanged with the IC module;
a network communication controller for connecting to the virtual memory module via a network; and
a reader/writer comprising a cache writer for writing data that is used on the IC module more frequently than a predetermined frequency to the IC module.

19. A data management system according to Claim 18,
wherein the reader/writer requests the virtual memory module to reflect cache in response to rewriting of data cached on the IC module,
and wherein the virtual memory module further comprises a cache reflector for rewriting corresponding data in the data storage unit in response to the request for reflecting cache.

20. A data management system according to Claim 18,
wherein at least one of the reader/writer, the virtual memory module, and the IC module comprises a cache selecting user interface for allowing a user to specify data to be cached,
and wherein the cache writer writes the data selected via the cache selecting user interface from the virtual memory module to the IC module.

21. A data management system according to Claim 18,
wherein a server-side reader/writer module that is connected via the network is provided,
wherein a reader/writer encryption processor for controlling encryption of communication data exchanged with the IC module and a cache writer for writing data that is used on the IC module more frequently than a predetermined frequency to the IC module are provided in the server-side reader/writer module,
and wherein the reader/writer receives a response received from the IC module, and transfers encrypted response data as it is to the server-side reader/writer module via the network, and the response data is processed in the server-side reader/writer module.

22. A reader/writer apparatus for accessing an IC module having an expanded memory area, the reader/writer apparatus comprising:
a reader/writer communication controller for accessing the memory area of the IC module;
a reader/writer encryption controller for controlling encryption of communication data exchanged with the IC module;
a network communication controller for connecting via a network to a virtual memory module for expanding the memory area of the IC module; and
a cache writer for writing data that is used on the IC module more frequently than a predetermined frequency to the IC module.

23. A reader/writer apparatus according to Claim 22,
wherein a request for reflecting cache is issued to the virtual memory module in response to rewriting of cached data on the IC module by the cache writer.

24. A reader/writer apparatus according to Claim 22,
further comprising a cache selecting user interface for allowing a user to specify data to be cached,
wherein the cache writer writes data selected via the cache selecting user interface from the virtual memory module to the IC module.

25. A virtual memory device for expanding a memory area associated with an IC module, the virtual memory device comprising:
a data storage unit for storing data that is used on the IC module;
a card encryption controller for controlling encryption of communication data; and
a cache reflector for updating content of corresponding data in the data storage unit in response to updating of data used on the IC module.

26. A virtual memory device according to Claim 25,
further comprising a cache selecting user interface for allowing a user to specify data to be cached.

27. A data management method for managing data associated with IC modules between a first terminal and a second terminal each having an IC module mode for securely storing data and a reader/writer mode for securely accessing another IC module,
wherein data that is used on the IC module of each of the terminals is associated with unique identification data, the identification data associated with data on the IC module being managed on a database,
and wherein when data is transferred from the first terminal to the second terminal,
first identification data of data to be transferred is obtained from the first terminal,
second identification data for associating the data to be transferred is obtained from the second terminal,
and the data associated with the first identification data is transferred to the second identification data on the database.

28. A data management system according to Claim 27,
wherein when data is transferred from the first terminal to the second terminal, the first terminal operates in the reader/writer mode and the second terminal operates in the IC module mode, and second identification data for associating the data to be transferred is read from the second terminal using a reader/writer function of the first terminal.

29. A data management method according to Claim 27,
wherein the first terminal is notified of completion of data transfer upon completion of data transfer on the database.

30. A data management method according to Claim 27,
wherein the second terminal is notified, via the first terminal, of completion of data transfer upon completion of data transfer on the database.

31. A data management method according to Claim 27,
wherein when data is transferred from the first terminal to the second terminal, a price for the use of data transfer service is charged to at least one of the first terminal and the second terminal.

32. A data management method according to Claim 27,
wherein each of the first and second terminals holds electronic money data, and wherein when data is transferred from the first terminal to the second terminal, electronic money data stored in the second terminal is decreased by a sum added by the data transfer and/or electronic money data stored in the first terminal is increased, thereby settling a transaction of data transfer by electronic money.
